(19) Europäisches Patentamt
European Patent Office
Office européen des brevets

(11) **EP 1 072 995 B1**

(12) **EUROPEAN PATENT SPECIFICATION**

(45) Date of publication and mention
of the grant of the patent:
**24.04.2013 Bulletin 2013/17**

(21) Application number: **99900672.9**

(22) Date of filing: **22.01.1999**

(51) Int Cl.:
**G06Q 20/04** (2012.01)    **G07F 19/00** (2006.01)
**G07F 7/00** (2006.01)

(86) International application number:
**PCT/JP1999/000283**

(87) International publication number:
**WO 1999/046716 (16.09.1999 Gazette 1999/37)**

(54) **ELECTRONIC CHECK MANAGEMENT UNIT**

ELEKTRONISCHE SCHECKMANAGEMENTEINHEIT

UNITÉ DE GESTION DE CHÈQUES ÉLECTRONIQUES

(84) Designated Contracting States:
**DE GB**

(30) Priority: **13.03.1998 JP 6274198**

(43) Date of publication of application:
**31.01.2001 Bulletin 2001/05**

(73) Proprietors:
• **FUJITSU LIMITED**
**Kawasaki-shi,**
**Kanagawa 211-8588 (JP)**
• **The Sakura Bank, Ltd.**
**Chiyoda-ku,**
**Tokyo 102-0074 (JP)**

(72) Inventors:
• **MORI, Nobuyuki**
**Kawasaki-shi**
**Kanagawa 211-8588 (JP)**
• **MORITA, Michihiro**
**Chiyoda-ku**
**Tokyo 102-0074 (JP)**

(74) Representative: **Mohun, Stephen John**
**Haseltine Lake LLP**
**Lincoln House, 5th Floor**
**300 High Holborn**
**London WC1V 7JH (GB)**

(56) References cited:
**EP-A- 0 732 662      EP-A- 0 757 338**
**WO-A1-96/02890      WO-A1-96/31965**
**FR-A- 2 634 920      JP-A- 6 162 059**
**JP-A- 9 251 502      US-A- 5 677 955**

• **HERZBERG AMIR et al., "MiniPay: Charging per Click on the Web", In: COMPUTER NETWORKS AND ISDN SYSTEMS, Vol. 29, No. 8-13, Sept. 1997, ELSEVIER NV (AMSTERDAM, THE NETHERLANDS), pp. 939-951, XP002921208**
• **ANONYMOUS, "Software Developer Software for Post-Dated Checks Boosts Parmatec", In: ITEM PROCESSING REPORT, Vol. 9, No. 3, (12-02-98), PHILLIPS BUSINESS INFORMATION (POTOMAC, USA), XP002921209**
• **DUKACH SIMON, "SNPP: A Simple Network Payment Protocol", In: PROCEEDINGS OF THE EIGHTH ANNUAL COMPUTER SECURITY APPLICATIONS CONFERENCE, (30-11-92), IEEE COMPUTER SOCIETY PRESS (LOS ALAMITOS, USA), pp. 173-179, XP002921210**
• **WAYNER PETER, DIGITAL CASH: COMMERCE ON THE NET, (01-04-97) (2nd Edition), ACADEMIC PRESS LTD (LONDON, UK), pages 241-245, (Retire Old Coins), XP002921211**

## Description

Technical Field

The present invention relates to an electronic check management unit. More particularly, the present invention relates to an electronic check management unit which provides improved usability.

Background Art

Electronic money is an instrument for financial transactions, which can be used in payments as an alternative to cash. It is factually a piece of information that can be electronically stored in an electronic wallet or similar device. When a person buys a product from a merchant, he/she makes a payment by transferring some electronic monetary data to a terminal of the merchant, instead of paying in cash. The merchant cashes in the collected electronic money by sending it from the terminal to an appropriate financial institution, such as banks. In this way, consumers can perform business transactions without using cash.

Checks are another financial instrument commonly used in the community for payment purposes. Using checks eliminates the need for carrying large amounts of cash, thus avoiding the risk of theft and other problems. Conventional checks are broadly divided into two types. One type is such checks that the issuing establishment guarantees their values, as with the self-addressed checks. The other type of checks rely on individual drawer's credibility, meaning that they could be dishonored in the worst case. In other words, the risk of failure in settlement is inherent in the latter type. Both types of checks are used properly in their suitable applications.

Such roles of checks in commercial transactions are supposed to be realised with some electronic medium, similarly to electronic money. This technique is referred to as the electronic check. There is a major difference between electronic check and electronic money. The Examined Japanese Patent Application Publication 7-11723 (1995), for example, describes an electronic currency system. According to this patent application, the electronic check differs from electronic money in that it has the following additional information: authentication data given by the issuing financial institution, expiration date (term of presentation), and records of redrawing and other transactions performed in the past (equivalent to endorsement in checks and bills). These pieces of information permit the receiver of an electronic check to have his/her check cashed through the issuing financial institution, the written amount of money being withdraw from a bank account of a person who drew that check.

Conventional electronic checks, however, have a problem in their usability, since they inherit the drawbacks of normal checks. More specifically, self-addressed checks are restricted to one prescribed usage because they are issued as a single check carrying a certain amount of money (i.e., the value written on the check) previously withdrawn from the deposit account of a person who requested the issuance of that electronic check. On the other hand, credit-based regular checks can be used to pay any amount of money, regardless of the current balance of the drawer's bank account. This benefit, however, can hardly be offered to such companies and individuals whose creditability is low.

Another inconvenience of conventional checks is that their values cannot be rewritten or divided. Although one can transfer a received check entirely to another person as a valuable instrument, it is not possible to transfer a fraction of the written value. In general, it is difficult to reuse the received checks without visiting a financial institution to change them into cash.

Disclosure of the Invention

An object of the present invention is to provide an electronic check management unit which provides excellent usability in business transactions using electronic checks.

An electronic check management unit according to the invention is defined in claim 1.

An electronic check system operates as follows. Suppose here that a customer sends a check issuance request to the financial data management system. The check issuing means then issues an electronic checkbook with a predetermined check payment celling. The issued electronic checkbook is then stored in the electronic check data storage means of the drawer-side electronic check management unit. When the customer gives a drawing command, the drawing permission determination means determines whether to grant permission to draw an electronic check, by comparing the check payment ceiling with a sum of the total amount of electronic checks that have been drawn and an amount of money to be paid. If the permission is granted, the electronic check drawing means draws an electronic check. The electronic check that has been drawn is accepted by and held in the electronic check accepting means at the drawer-side electronic check management unit. When the drawee issues a cashing request to the drawee-side electronic check management unit, the cashing requesting means sends a cashing request to the financial data management system. In response to this, the cashing means in the financial data management system examines the anthentication data contained the received electronic check. If this verification is successfully finished, it cashes in the received electronic check, thus yielding the amount of money written on the check.

A financial data management system operates as follows. Suppose that a customer sends a check issuance request to the financial data management system. The check issuing means responds to this request by issuing an electronic checkbook with a predetermined check payment ceiling. When a cashing request is received, the cashing means examines the authentication data contained in the received electronic check. If this verification is successfully finished, it cashes in the received electronic check, thus yielding the amount of money written on the check.

Brief Description of the Drawings

FIG. 1 is a conceptual view of an electronic check system;
FIG. 2 is a total block diagram of an electronic check system;
FIG. 3 shows data stored in a memory of an electronic wallet device;
FIG. 4 is a first diagram which shows a data format of "Check/Bill Management" segment;
FIG. 5 is a second diagram which shows the same;
FIG. 6 is a diagram showing a first example of a payment process;
FIG. 7 is a diagram showing a second example of the payment process;
FIG. 8 is a diagram showing a third example of the payment process;
FIG. 9 is a diagram showing a fourth example of the payment process;
FIG. 10 is a flowchart which shows a process of requesting the issuance of electronic checks through an ATM;
FIG. 11 is a flowchart which shows a process of requesting the issuance of electronic checks through an electronic wallet device;
FIG. 12 is the first half of a flowchart showing an electronic check issuing process;
FIG. 13 is the second half of the same;
FIG. 14 is the first half of a flowchart showing a drawing process (payment process);
FIG. 15 is the second half of the same;
FIG. 16 is the first half of a flowchart showing a redrawing process;
FIG. 17 is the second half of the same;
FIG. 18 is the first half of a flowchart showing a process of receiving an electronic check;
FIG. 19 is the second half of the same;
FIG. 20 is a diagram which shows a first example of check ID assignment;
FIG. 21 is a diagram showing a second example of check ID assignment; and
FIG. 22 is a diagram which shows a third example of check ID assignment.

Best Mode for Carrying out the Invention Preferred embodiments of the present invention will be described bellow with reference to the accompanying drawings.

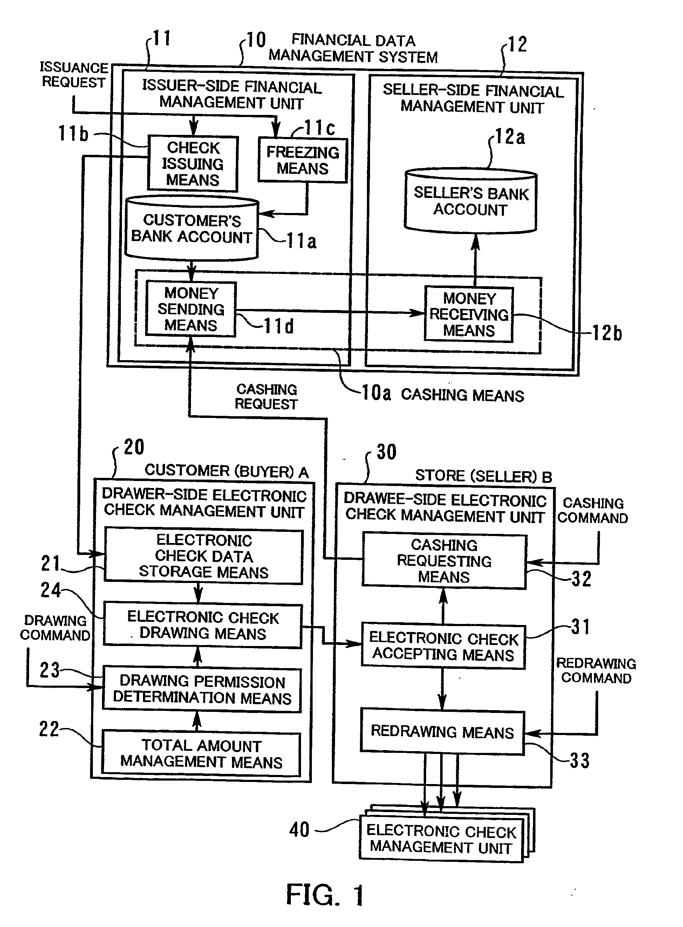

FIG. 1 provides an electronic check system comprising the following entities: a financial data management system 10 which manages financial data concerting a plurality of financial institutions; a drawer-side electronic check management unit 20 owned by a customer (or purchaser) A who buys a product: and a drawee-side electronic check management unit 30 owned by a store (or seller) B where that product is sold.

The financial data management system 10 comprises an issuer-side financial management unit 11 owned by a financial institution that is an issuer of electronic checks and a seller-side financial management unit 12 owned by another financial institution at which the store B has an account.

The issuer-side financial management unit 11 comprises a customer's bank account 11a, a check issuing means 11b, a freezing means 11c, and a money sending means 11d. The customer's bank account 11a is a database that manages a deposit account of the customer A. The customer A sends an issuance request to the issuer-side financial management unit 11. When this request is received, the check issuing means 11b issues an electronic checkbook with appropriate authentication data and some parameters limiting the amount to be paid by check. More specifically, parameters such as the check payment ceiling, drawing count limit (i.e., how many times each electronic check can be redrawn), and valid period of checks are determined on the basis of the amount of money that the customer A requires for future payments, as well as taking his/her own creditworthiness (i.e., a numerical value representing the customer's credibility) into consideration. These parameters are then added to the electronic checkbook to be issued. The check issuing means 11b issues as many new checks as requested by the customer A. The freezing means 11c freezes some amount of deposit in the customer's bank account 11a, depending on the value of his/her creditworthiness. The money sending means 11d receives a request for cashing of a check that has been drawn by the customer A. In response to this cashing request, the money sending means 11d validates the electronic check itself that has been received together with the request. If the check is successfully validated, the money sending means 11d withdraws the written amount of money from the customer's bank account 11a, and sends it to the seller-side financial management unit 12 in the form of electronic monetary data.

The seller-side financial management unit 12 comprises a seller's bank account 12a and a money receiving means 12b. The seller's bank account 12a is a database that manages a bank account of the store B, which wishes to clear the electronic check. The money receiving means 12b receives the amount of money written on the electronic check and deposits it to the seller's bank account 12a, based on the monetary data sent from the issuer-side financial management unit 11.

Although they are illustrated as separate entities in FIG. 1, the issuer-side financial management unit 11 and seller-side financial management unit 12 may be implemented as a single entity when the seller B's bank account is located in the same financial institution that issues the electronic checks of interest. In that case, the money sending means 11d in the issuer-side financial management unit 11 and the money receiving means 12b in the seller-side financial management unit 12 would function as a cashing means 10a which performs a fund transfer from the customer's bank account 11a to the seller's bank account 12a in response to a cashing request from the seller B.

The drawer-side electronic check management unit 20 comprises the following elements: an electronic check data storage means 21, a total amount management means 22, a drawing permission determination means 23, and an electronic check drawing means 24. The electronic check data storage means 21 holds an electronic checkbook containing a plurality of new electronic checks issued by the financial data management system 10. The total amount management means 22 calculates the total amount of payments that have been made so far, each time the customer draws an electronic check. The drawing permission determination means 23 determines whether to grant permission to draw a check, when a drawing command is received from the customer A. This determination should be made on the basis of the number of remaining electronic checks, the check payment ceiling, the valid period, and other related parameters. Here, the check payment ceiling should be compared with the present total amount plus the amount that the customer is paying this time. If the expected new total amount exceeds the check payment ceiling, the drawing permission determination means 23 does not grant the permission. If the expected mount is within the limit, it permits the customer to draw a new electronic check for that amount. Receiving the permission from the drawing permission determination means 23, the electronic check drawing means 24 draws an electronic check to the drawee-side electronic check management unit 30 for the amount of money specified in the drawing command.

The drawee-side electronic check management unit 30 comprises an electronic check accepting means 31, a cashing requesting means 32, and a redrawing means 33. The electronic check accepting means 31 receives and holds the electronic check from the drawer-side electronic check management unit 20. The cashing requesting means 32 transmits a cashing request to the issuer-side financial management unit 11 when a cashing command is received from the store B, requesting to cash in the electronic check that the electronic check accepting means 31 has received. This cashing request is, for example, a request for money transfer to a particular bank account. The redrawing means 33 processes redrawing commands. When this command is entered, the redrawing means 33 endorses the electronic check received by the electronic check accepting means 31 and redraws the check to other electronic check management units 40. The endorsement refers to an action of adding a piece of information about the redrawer to the electronic check to be redrawn. (More specifically, some information has to be placed in "Reuse Data" section as will be described later.) In the redrawing of an electronic check, it is possible to divide the original amount to a plurality of electronic checks. That is, when the electronic check accepting means 31 has a received electronic check, this check can be divided and redistributed to a plurality of electronic check management units 40, if desired. In this case, the newly created electronic checks, each containing a divided amount of money, will be assigned new check IDs.

The above electronic check system operates as follows. Suppose that the customer A now wishes to make payments by electronic check. The customer then requests the issuance of electronic checks by sending an issuance request to the issuer-side financial management unit 11, where he/she has his/her own bank account. This issuance request contain information about how many new checks are necessary and how much money will be paid by check. In response to the issuance request, the check issuing means 11b issues the requested electronic checks, and the freezing means 11c freezes a certain amount of money in the customer's bank account 11a. The new electronic checks issued by the check issuing means 11b are entered to the drawer-side electronic check management unit 20 owned by the customer A. The electronic check data storage means 21 then keeps them.

The customer A now sends a purchase order to the store B to buy a certain product from them. He/she enters a drawing command to the drawer-side electronic check management unit 20 to make a payment, so that the electronic check will hold the amount of money to be paid for the product. The drawing permission determination means 23 then determines whether to permit the drawing of that check. If the permission is granted, the electronic check drawing means 24 transmits the electronic check to the drawee-side electronic check management unit 30. The electronic check accepting means 31 actually accepts that electronic check.

The store B wishes to have the received electronic check cashed. To do so, they enter a cashing command to their drawee-side electronic check management unit 30. In response to this, the cashing requesting means 32 transmits a cashing request to the issuer-side financial management unit 11, along with the electronic check itself. This cashing request is received by the money sending means 11d. After validating the received electronic check, the money sending means 11d makes access to the customer's bank account 11a to withdraw some monetary data for the amount specified in the electronic check. This monetary data is then sent to the seller-side financial management unit 12. At the seller-side financial management unit 12, the money receiving means 12b receives the monetary data and adds it to the seller's bank account 12a.

Instead of cashing the received electronic check, the store B may wish to redraw it to other parties. In this case, he/she enters a redrawing command to his/her drawee-side electronic check management unit 30. The redrawing means 33 endorses the electronic check held in the electronic check accepting means 31 and redraws the endorsed check, dividing it into a plurality of electronic checks if required.

As described above, each electronic check is examined at the point of drawing so as to ensure that it does not exceed the predetermined ceiling. This feature protects the electronic checks from being used frandulently for large payments. Further, the issuer-side financial management unit 11 freezes a certain amount of money depending on the customer A's creditworthiness, thereby reducing the possibility of having electronic checks dishonored by the bank. Also, the present invention does no harm to the usability of electronic checks. Customers can use them just as they wish, as long as the total amount is within a predetermined limit. In addition, the proposed system allows sellers to divide a received electronic check when they redraw it this feature permits them to use the received electronic check even for smaller payments compared to what the original check is worth.

In the system of FIG. 1, the drawer-side electronic check management unit 20 and the drawee-side electronic check management unit 30 are illustrated as separate functional entities. In reality, however, their functions may not always be implemented separately, but can be integrated in a single electronic check management unit, such as an electronic wallet system or other terminal device used in a store. In the description of more specific embodiments that follows, it is assumed that electronic wallet systems and terminal devices provide both functions of the drawer-side electronic check management unit 20 and drawee-side electronic check management unit 30.

The frozen amount of bank deposit, the drawing count limit, and the valid period of electronic checks are obtained from the following calculations, based on the customer's creditworthiness Cw.

$$\text{Frozen Deposit} = \text{Check Payment Ceiling} \times (100 - Cw)/100 \qquad \dots \dots \dots \dots (1)$$

$$\text{Drawing Count Limit} = \text{Standard Drawing Count} \times (1 + Cw/100)/(2 - Cw/100) \qquad \dots \dots \dots (2)$$

$$\text{Valid Period} = \text{Standard Valid Period} \times (1 + Cw/100)/(2 - Cw/100) \qquad \dots \dots \dots (3)$$

where the creditworthiness Cw ranges from 0 percent to 100 percent depending on how creditworthy the issuing financial institution thinks the customer is. The greater the number Cw is, the more trustworthy he/she is. The check payment ceiling is determined by the customer himself/herself, depending on how much money is needed for future payments. The standard drawing count (e.g., 10 times) is a predefined parameters given by the issuing financial institution. The standard valid period (e.g., three months) is another predetermined parameter given by the issuing financial institution.

According to the above formulas, the drawing count limit and the valid period will be reduced to a half of the standard values when the creditworthiness is zero. They reach the standard values when the creditworthiness is 50 percent, and become twofold when the creditworthiness is 100 percent.

As an alternative to the above method, the drawing count limit may be calculated from the check payment ceiling or the frozen amount of bank deposit. In this case, the frozen amount of bank deposit may not necessarily be based on the check payment celling or the creditworthiness of the customer.

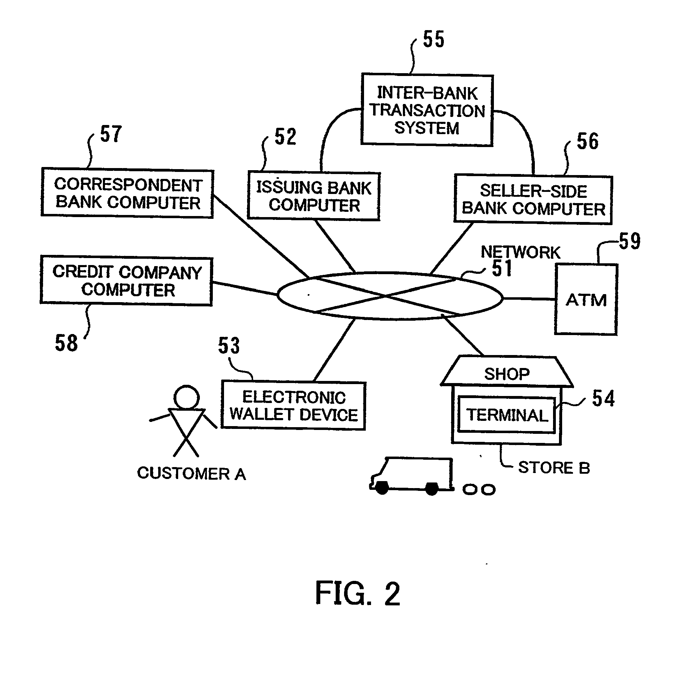

FIG. 2 is a total block diagram of an electronic check system. In this system, a plurality of computers and other related devices are interconnected by a network 51.

An issuing bank computer 52 is a computer serving a bank that supplies electronic checks to their customers. An electronic wallet device 53 holds electronic monetary data, including electronic checks, and allows a customer A to draw an electronic check to a terminal 54 owned by a store B. Besides receiving an electronic check from the electronic wallet device 53, the terminal 54 is used to request the issuing bank computer 52 to transfer money to the drawee's account to clear the received electronic check. An inter-bank transaction system 55, called the "Zengin" system, interconnects the issuing bank computer 52 and seller-side bank computer 56, supporting and administrating the transfer of monetary data among many banks. A seller-side bank computer 56 is a computer serving a bank where the store B has their account. A correspondent bank computer 57 is a computer serving a bank has a correspondent contract with the check issuing bank. A credit company computer 58 is a computer that serves a credit company providing the customer A with their credit services. An automatic teller machine (ATM) 59 is a terminal of a financial institution which is directly connected to the network.

Although not explicitly indicated, the electronic wallet device 53, terminal 54, and ATM 59 are computer-based devices having a processor, memory, input/output interface, and other components, as with other computers working in financial institutions.

Suppose that, in the above system, the customer A requests the issuance of electronic checks by using his/her electronic wallet device 53 or through an ATM directly connected to the issuing bank computer 52. In response to the request, the issuing bank computer 52 issues electronic checks. The electronic wallet device 53 obtains various data described below.

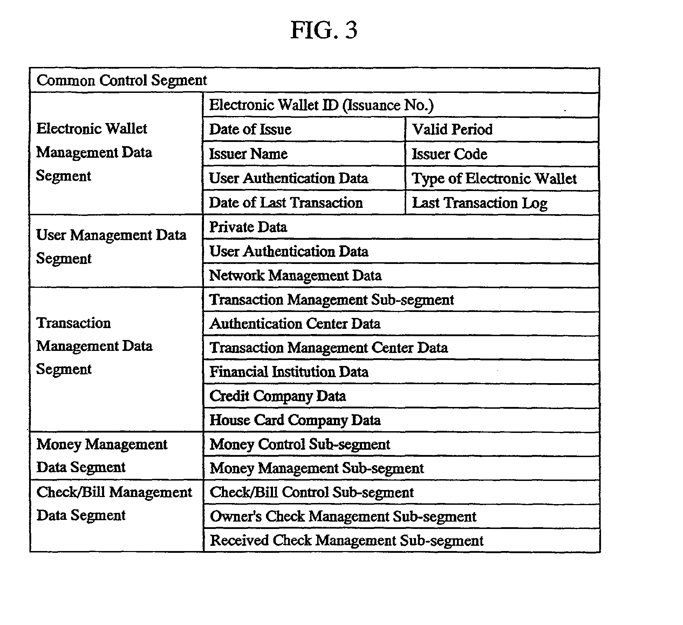

FIG. 3 shows what data is stored in the memory of the electronic wallet device 53.

The "Common Control" segment contains basic control parameters necessary for the electronic wallet device 53 to operate. More specifically, this segment holds memory addresses of various data blocks described below.

The "Electronic Wallet Management Data" segment has the following information fields:

- Electronic Wallet ID (Issuance No.)
- Date of Issue
- Valid Period
- Issuer Name
- Issuer Code
- Password
- Type of Electronic Wallet
- Date of Last Transaction
- Last Transaction Log

The Electronic Wallet ID field contains an identification code that is assigned to each electronic wallet device when it is issued. The Date of Issue field indicates when the electronic wallet device was issued. The Issuer Name field shows the name of an establishment that issued the electronic wallet device. The Issuer Code field contains the identification code of the issuer. The User Authentication Data field contains a special character string that only the owner of the electronic wallet device knows, which is used to authenticate the user of the electronic wallet device. The Type of Electronic Wallet field indicates the current operation mode and I/O mode being set to the electronic wallet. While electronic wallet systems are designed for electronic cash transactions and settlement account (checks and bills) transactions, each individual electronic wallet device may be restricted to either of those two kinds of transactions, or can handle both kinds of transactions, depending on its current operation mode setup. The I/O mode determines whether to enable input/output functions. The Date of Last Transaction field indicates the date and time of the most recently conducted transaction, including inquiry, and the Last Transaction Log field holds a log record of that transaction.

The "User Management Data" segment is divided into the following three parts: "Private Data" sub-segment, "User Authentication Data" sub-segment, and "Network Management Data" sub-segment. The Private Data sub-segment contains the owner's private information, including his/her name, sex, and address. The User Authentication Data sub-segment contains digital signature and the like. The Network Management Data sub-segment contains network address information and the owner's identification code.

The "Transaction Management Data" segment is divided into the following parts: "Transaction Management" sub-segment, "Authentication Center Data," "Transaction Management Center Data," "Financial Institution Data," "Credit Company Data," and "House Card Company Data." The Transaction Management sub-segment contains the memory addresses of various information resources necessary for transaction management. The Authentication Center Data field contains the name and identification code of an authentication center. The Transaction Management Center Data field contains the name and identification code of a transaction management center. The Financial Institution Data field contains the name and identification code of a financial institution. The Credit Company Data field contains the name and identification code of a credit company. The House Card Company Data field contains the name and identification code of a house card company.

The "Money Management Data" segment is used in electronic money transactions, which comprises "Money Control" and "Money Management" sub-segments. The Money Control sub-segment contains information such as the present date and sub-passwords. The Money Management sub-segment shows the current balance of the electronic money account, as well as containing some criteria to be considered in payment transactions (e.g., whether to perform user authentication).

The "Check/Bill Management Data" segment comprises the following parts: "Check/Bill Control" sub-segment, "Owner's Check Management" sub-segment, and "Received Check Management" sub-segment. The Check/Bill Control sub-segment contains the memory addresses of various information resources necessary for managing checks and bills. The Owner's Check Management sub-segment contains the name of the issuing financial institution, as well as indicating the check payment ceiling. The Received Check Management sub-segment contains information about received checks, including the name of the financial institution that issued a check and the face value of that check.

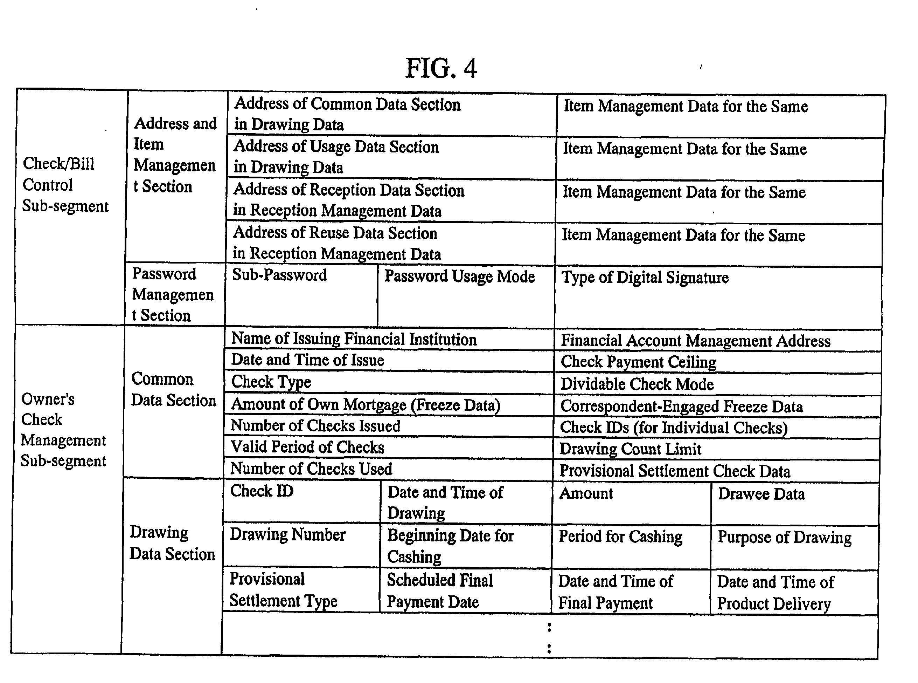

FIG. 4 is a first diagram showing the data format of the check/bill management segment. This diagram presents what data items are contained in the Check/Bill Control sub-segment and Owner's Check Management sub-segment.

The Check/Bill Control sub-segment is further divided into "Address and Item Management" section, and "Password Management" section. The Address and Item Management section stores the following information: address of common data are in Drawing Data section and item management data for the same, address of usage data area in Drawing Data section and item management data for the same, address of Reception Data subsection in Reception Data section and item management data for the same, and address of reuse data area in Reception Data Section and item management data for the same. The Password Management section stores sub-passwords, password usage mode, and type of digital signature.

The "Owner's Check Management" sub-segment is divided into "Common Data" section and "Drawing Data" section. The Common Data section contains the following data items:

- Name of Issuing Financial Institution
- Financial Account Management Address
- Date and Time of Issue
- Check Payment Ceiling
- Check Type
- Dividable Check Mode
- Amount of Own Mortgage (Freeze Data)
- Correspondent-Engaged Freeze Data
- Number of Checks Issued
- Check IDs (for Individual Checks)
- Valid Period of Checks
- Drawing Count Limit
- Number of Checks Used
- Provisional Settlement Check Data

The provisional settlement check data is encrypted with blinding techniques, so that only the issuing bank computer 52 can read it.

The "Check Payment Ceiling" denotes the total amount of payments that can be made with the issued electronic checks. The electronic checking account will be balanced when the valid period of the issued check expires, or when the total amount of payments reaches the check payment ceiling. After balancing the account, the customer can request the issuance of new electronic checks. In the case the check payment ceiling is not reached, the difference is subtracted from the frozen amount of deposit.

The "Check Type" refers to a collection of properties of checks, which include: self-addressed check, engaged frozen check, current account check, and oreditworthiness.

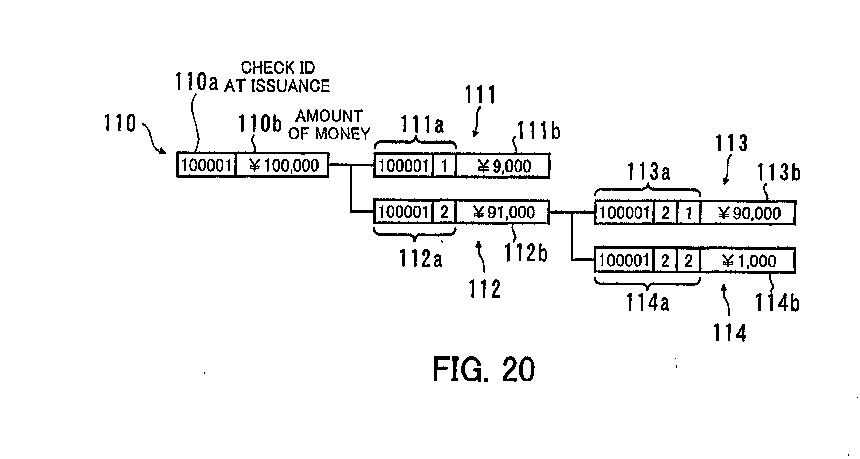

The "Dividable Check Mode" enables the receiver of a check to divide the face value when he/she redraws it. When this mode is enabled, the redrawn check identifier (ID) will be assigned to each redrawn electronic check in either of the following three methods: hierarchical method, value range sequence method, and reassignment method. The details of these methods will be described later with reference to FIGS. 20 to 22.

The "Amount of Own Mortgage" refers to the amount of deposit frozen in the issuing bank, which is determined on the basis of the customer's creditworthiness. Those who have higher credibility need less mortgage, and those who have lower credibility need more mortgage.

The "Correspondent-Engaged Freeze Data" includes the name of a correspondent bank and the amount of deposit frozen in that bank, if applicable.

The "Number of Checks Issued" is a ceiling that is determined at the time of issuance of a checkbook. The customer can no longer draw new checks once this limit is reached.

The "Check ID" is an identification number which is used to identify each individual check that has been drawn by the customer. Unlike the check numbers, which are sequential, the check IDs are non-predictable character strings composed of alphanumeric characters and other symbols for the purpose of protection against fraud. An electronic check will be assigned an extended check ID when it is redrawn.

The "Valid Period of Checks" specifies the validity of the issued new electronic checks. After the expiration of this period, the customer will not be able to draw a check any longer.

The "Drawing Count Limit" defines how many times the recipient (or endorser) can redraw the electronic check that he/she received. When the drawing count limit is set to "1," a person who received this electronic check form the original drawer cannot transfer it to third parties, meaning that he/she should have it cashed. When the drawing count limit is set to zero, this means that there is no limitation about the repetition of endorsements.

The "Number of Checks Used" is a counter that indicates how many checks the customer has drawn so far, including those for provisional payments. This counter is incremented each time a new check is used for payment.

The "Provisional Check Payment Data" is a record of IDs and addresses of electronic checks that have been used for provisional payments.

The "Drawing Data" section contains the following data items:

- Check ID
- Date and Time of Drawing
- Amount
- Drawee Data
- Drawing Number
- Beginning Date for Cashing
- Period for Cashing
- Purpose of Drawing
- Provisional Payment Type
- Scheduled Final Payment Date
- Date and Time of Final Payment
- Date and Time of Product Delivery

These data items are given to each electronic check when the customer draws it.

The "Drawee Data" field records information about the drawees, including their names and addresses.

The "Drawing Number" indicates how many times this electronic check has been drawn. This Drawing Number is intended for fraud protection, as is the Redrawing Number (described later).

The "Beginning Date for Cashing" indicates the earliest date when the receiver can cash in the received electronic check. The receiver of a check cannot have it cashed until the beginning date comes. Note that this date has to be set with the consent of the drawee.

The "Period for Cashing" specifies a time period during which the received check can be cashed. This period is defined at the time of drawing, such that it will start at the "Beginning Date for Cashing" and end before the expiration of "Valid Period of Checks."

The "Purpose of Drawing" field records for what purposes the electronic check is used. They may include the payments for information service used, products purchased, and other business transactions made by the customer. (The same applies to "Purpose of Redrawing" which will be described later)

The "Provisional Payment Type" shows how the provisional check payment is made. There are three types of payment methods: paying directly to the seller, paying to a bank where the seller has their account, and paying to a transaction management center.

The "Scheduled Final Payment Date" indicates when the final payment should be made after the delivery of a product in the case of a transaction with a provisional payment.

The "Date and Time of Final Payment" indicates the date and time when the final payment was actually made.

In The "Date and Time of Product Delivery" indicates when the purchased product (goods or information services) was delivered.

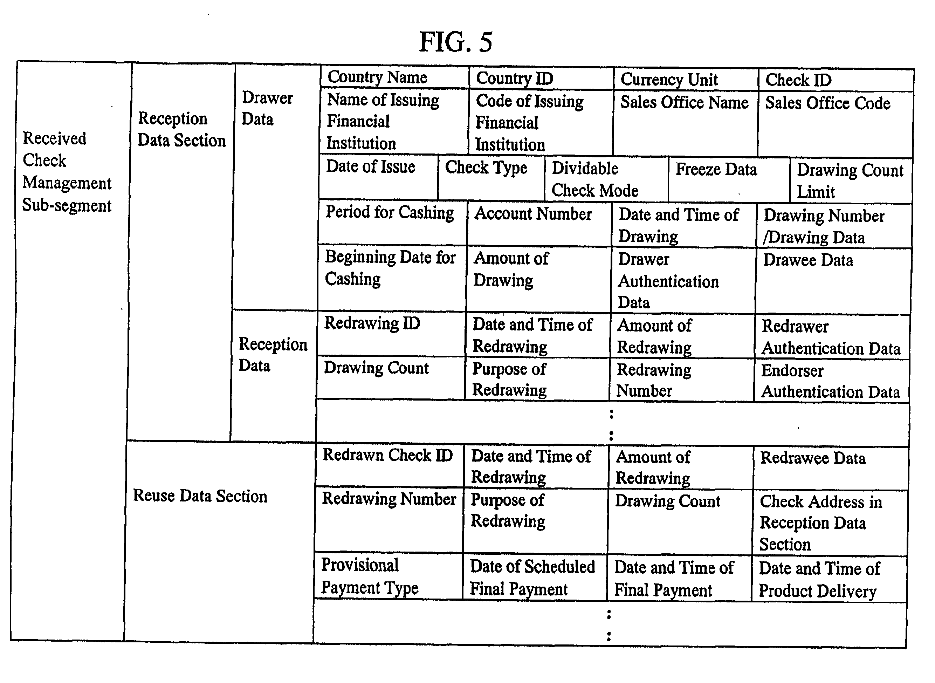

FIG. 5 is another diagram which shows the data format and content of the "Received Check Management" sub-segment.

The Received Check Management sub-segment consists of "Reception Data" section and "Reuse Data" section. The Reception Data Section is further divided into "Drawer Data" subsection and "Reception Data" subsection.

The Drawer Data subsection contains the following data items:

- Country Name
- Country ID
- Currency Unit
- Check ID

- Name of Issuing Financial Institution
- Code of Issuing Financial Institution
- Sales Office Name
- Sales Office Code
- Date of Issue
- Check Type
- Dividable Check Mode
- Freeze Data
- Max Allowable Drawing Count
- Period for Cashing
- Account Number
- Date and Time of Drawing
- Drawing Number/Drawing Data
- Beginning Date for Cashing
- Amount of Drawing
- Drawer Authentication Data
- Drawee Data

where the Drawer Authentication Data refers to a digital signature used to authenticate the identify of the drawee. (The same applies to the Redrawer Authentication Data which will be described later.) The Account Number is encrypted so that only the issuing bank computer can read it.

The Reception Data subsection contains the following data items:

- Redrawing ID
- Date and Time of Redrawing
- Amount of Redrawing
- Redrawer Authentication Data
- Drawing Count
- Purpose of Redrawing
- Redrawing Number
- Endorser Authentication Data

These data items are collected and saved when a redrawn electronic check is received.

The Reuse Data section contains the following data items:

- Redrawn Check ID
- Date and Time of Redrawing
- Amount of Redrawing
- Redrawee Data
- Redrawing Number
- Purpose of Redrawing
- Drawing Count
- Check Address in Reception Data Section
- Provisional Payment Type
- Date of Scheduled Final Payment
- Date and Time of Final Payment
- Date and Time of Product Delivers

These data items are collected and recorded each time a check is redrawn.

While the data areas have been explained with reference to FIGS. 3 to 5, it should be noted here that like data areas are provided in the terminal used in store fronts.

The above-described electronic check system enables payments using electronic checks. Four payment methods will be described bellow.

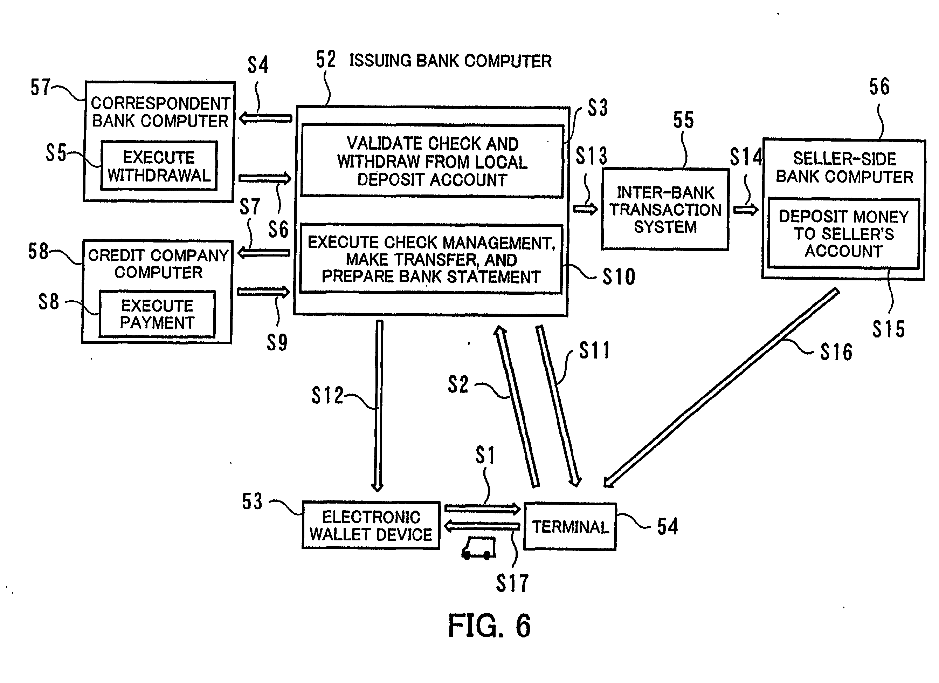

FIG. 6 is a diagram showing a first example of the proposed payment process.

(S1) A customer issues a purchase order to a store to buy a certain product from them. With his/her electronic wallet device 53, the customer draws an electronic check to pay the cost.

(S2) The store accepts the electronic check at their terminal 54. In response to the order, a store clerk operates the terminal 54 to request the issuing bank computer 52 to validate the electronic check and make a transfer. In this request, the store specifies their own bank account as the destination.

(S3) Upon receipt of the request, the issuing bank computer 52 examines the authentication data of the electronic check in question, thereby ensuring that the check was issued by the bank itself. After the validation, the issuing bank computer 52 attempts a withdrawal from the customer A's bank account being managed in itself. If the current balance of the customer A's account shows a sufficient deposit, the process advances directly to step S10. If not, steps S4 to S9 should be executed.

(S4) The issuing bank computer 52 requests its correspondent bank computer 57 to make a withdrawal.

(S5) The correspondent bank computer 57 initiates a withdrawal as requested, if the current balance of the customer A's account shows a sufficient deposit.

(S6) The correspondent bank computer 57 notifies the issuing bank computer 52 of the result of the withdrawal. That is, it reports the specifics if the requested withdrawal has successfully been finished. If it is unable to execute the withdrawal due to a shortage of deposit, the correspondent bank computer 57 so notifies the issuing bank computer 52.

The issuing bank computer 52 receives the result notification from the correspondent bank computer 57.

If the notification indicates successful completion, the issuing bank computer 52 advances its processing to step S10. If not, it goes to step S7.

(S7) The issuing bank computer 52 requests the credit company computer 58 to make a payment.

(S8) If the remaining credit of the customer A allows it, the credit company computer 58 executes the requested payment. The credit company makes this payment on behalf of the customer A. The customer A has to settle that debt at some future date.

(S9) The credit company computer 58 notifies the issuing bank computer 52 of the result of the payment. That is, it reports the specifics when the requested payment has successfully been finished. When it is unable to execute the payment due to the insufficient remaining credit, the credit company computer 58 so notifies the issuing bank computer 52.

(S10) The issuing bank computer 52 executes processes of check management, fund transfer for payment, and preparation of a bank statement.

(S11) The issuing bank computer 52 notifies the terminal 54 at the store B of the overall result of the past processing steps S3 to S9, which were executed in response to the fund transfer request from the terminal 54.

(S12) The issuing bank computer 52 sends the created bank statement to the customer A.

(S13) The issuing bank computer 52 requests the inter-bank transaction system 55 to make a fund transfer.

(S14) The inter-bank transaction system 55 notifies the seller-side bank computer 56 of the transfer.

(S15) The seller-side bank computer 56 deposits the transferred money into the seller's account.

(S16) The seller-side bank computer 56 notifies the seller terminal 54 of the completion of the requested transfer.

(S17) After confirming the completion notification, a clerk working at the store B ships the ordered product to the customer A.

With the above mechanism, the customer can make a payment for the product by using an electronic check.

In the above example transaction, the merchant never fails to collect money, because they confirms the reception of payments before shipping their products. Conversely, there is a possibility that customers would receive no products in spite of their payments; i.e., some bogus company could cheat them using the above-described electronic check processing. To ensure the delivery of products to the customers, the following processing steps are implemented in the system.

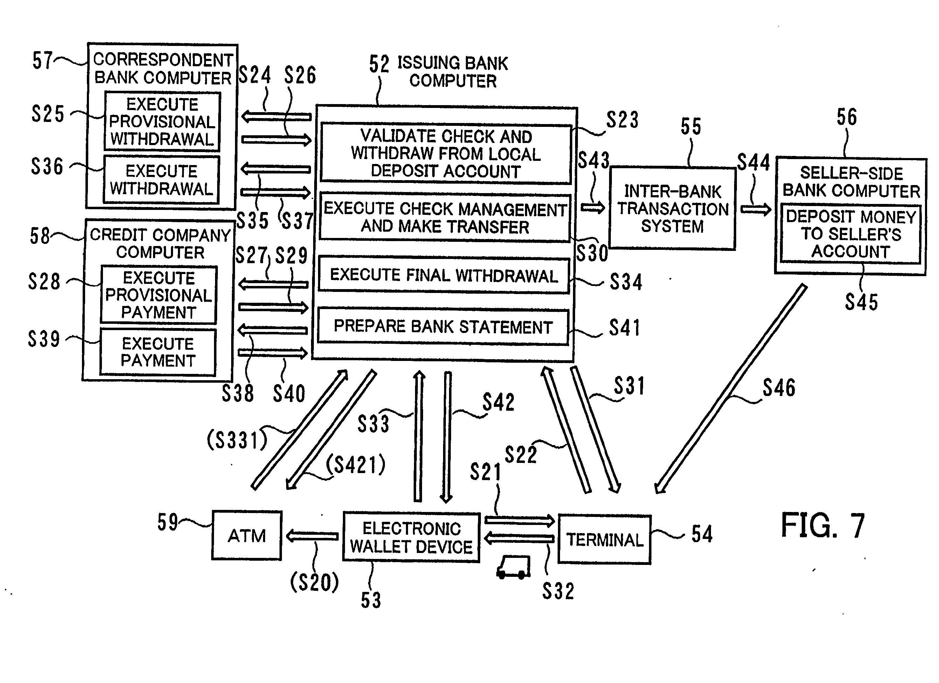

FIG. 7 is a diagram showing a second example of the proposed payment process. Steps S20, S331, and S421 in parentheses are optional steps to be executed in a variation of the proposed payment process, which will be explained separately from the main process flow.

(S21) A customer issues a purchase order to a store to buy a certain product from them. With his/her electronic wallet device 53, the customer draws an electronic check to make a provisional payment for the cost.

(S22) The store accepts the electronic check at its terminal 54. In response to this, a store clerk operates the terminal 54 to request the issuing bank computer 52 to validate the electronic check for the purpose of provisional payment and make a transfer.

(S23) Upon receipt of the request, the issuing bank computer 52 examines the authentication data of the electronic check for provisional payment, thereby ensuring that the origin of the check is the bank itself. After the examination, the issuing bank computer 52 performs a provisional withdrawal from the customer A's account in itself. More specifically, the issuing bank computer 52 freezes a part of his/her deposit for the payment. Note that no fund is actually transferred at this stage of provisional withdrawal. If the current balance of the customer A's account shows a sufficient deposit, the process advances directly to step S30. If not, steps S24 to S29 should be executed.

(S24) The issuing bank computer 52 requests its correspondent bank computer 57 to make a provisional withdrawal.

(S25) The correspondent bank computer 57 initiates a provisional withdrawal as requested, if the current balance of the customer A's account shows a sufficient deposit.

(S26) The correspondent bank computer 57 notifies the issuing bank computer 52 of the result of the provisional withdrawal. That is, it reports the specifics if the provisional withdrawal has successfully been finished. If it is unable to execute the provisional withdrawal due to a shortage of deposit, the correspondent bank computer 57 so notifies the issuing bank computer 52.

The issuing bank computer 52 receives the result notification from the correspondent bank computer 57. If the notification indicates successful completion, the issuing bank computer 52 advances its processing to step S30. If not, it executes steps S27 and later.

(S27) The issuing bank computer 52 requests a credit company computer 58 to make a provisional payment.

(S28) If the remaining credit of the customer A allows it, the credit company computer 58 executes the provisional payment as requested.

(S29) The credit company computer 58 notifies the issuing bank computer 52 of the result of the provisional payment. That is, it reports the specifics when the provisional payment has successfully finished. When it is unable to execute a provisional payment due to the lack of sufficient credit, the credit company computer 58 so notifies the issuing bank computer 52.

(S30) The issuing bank computer 52 executes the processes of check management and preparation for transfer. Here, the term "preparation for transfer" denotes a process to freeze a required amount of money for future transfer operations.

(S31) The issuing bank computer 52 notifies the terminal 54 at the store B of the overall result of steps S23 to S29, which were executed in response to the fund transfer request from the terminal 54.

(S32) The notification message from the issuing bank computer 52 indicates that the payment has been ensured. With this indication, a clerk at the store B ships the ordered product to the customer A.

(S33) The customer A makes sure that the delivered product is exactly what he/she ordered. With his/her electronic wallet device 53, the customer A then sends a payment permission to the issuing bank computer 52.

(S34) The issuing bank computer 52 executes a final withdrawal from the customer's account to which the cost is being charged. When the charged account is in the issuing bank itself, the process proceeds to correspondent bank, the process executes steps S35 to S37. When the charged account is in the credit company, the process executes steps S38 to S40.

(S35) When the charged account is in the correspondent bank, the issuing bank computer 52 requests the correspondent bank computer 57 to execute a payment.

(S36) The correspondent bank computer 57 withdraws money for the requested payment.

(S37) The correspondent bank computer 57 notifies the issuing bank computer 52 of the result of the withdrawal. The process then advances to step S41.

(S38) When the charged account is in the credit company, the issuing bank computer 52 requests the credit company computer 58 to execute a payment.

(S39) The credit company computer 58 withdraws money for the requested payment.

(S40) The credit company computer 58 notifies the issuing bank computer 52 of the result of the payment.

(S41) The issuing bank computer 52 creates a bank statement.

(S42) The issuing bank computer 52 sends the created bank statement to the customer A.

(S43) The issuing bank computer 52 requests the inter-bank transaction system 55 to make a relevant fund transfer.

(S44) The inter-bank transaction system 55 notifies the seller-side bank computer 56 of the transfer.

(S45) The seller-side bank computer 56 deposits the transferred money to the seller's account.

(S46) The seller-side bank computer 56 notifies the seller terminal 54 of the completion of the requested transfer.

The above-described way of electronic check payment permits the customer A to avoid the risk of missing a product for which he/she paid money. Optionally, the proposed electronic check system may be configured to clear an electronic check on its due date even if the purchaser does not grant final payment permission by that date. Alternatively, the system may be designed to stop processing the clearance of an electronic check when the drawer cancels the payment.

Referring now to the parenthesized steps in FIG. 7, the following section presents a variation of the proposed payment process. In this variation process, the customer uses an ATM 59 to make an electronic check payment. He/she first executes step S20 before issuing an order at S21.

(S20) The customer A inserts his/her electronic wallet device 53 to an ATM 59.

The process then advances to step S21 and continues until it reaches step S32. Then the customer A executes step S331 in stead of S33.

(S331) The customer A makes sure that the delivered product is exactly what he/she ordered, and sends a payment permission to the issuing bank computer 52 through the ATM 59.

Steps S34 to S41 are then executed. The subsequent step S42 is replaced with step S421.

(S421) The issuing bank computer 52 sends the data of the created bank statement to the ATM 59 to have the statement delivered from the ATM 59 to the customer A. The process then advances to steps S43 to S46.

A still another payment method will now be described below. Recall that, in the foregoing two processing methods, the request for a transfer is addressed to the bank that issued the electronic check originally. In contrast to this, another method is to allow a seller to send a cashing request to the bank that manages the seller's business account.

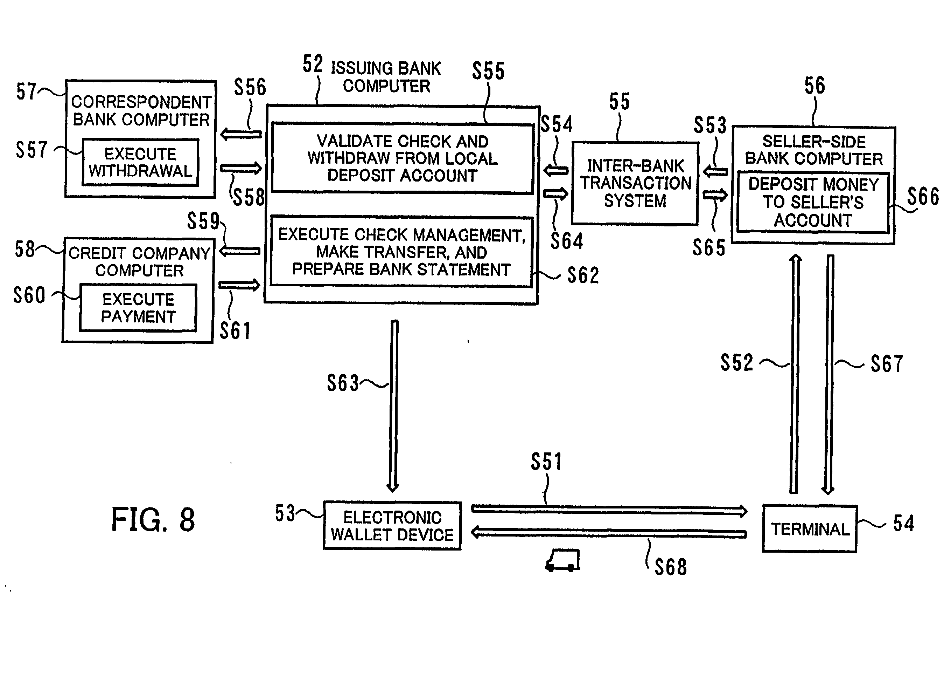

FIG. 8 is a diagram showing a third example of the proposed payment processes.

(S51) A customer issues a purchase order to a store B to buy a certain product from them. With his/her electronic wallet device 53, the customer A draws an electronic check to pay the cost.
(S52) The store accepts the electronic check at its terminal 54. In response to this, a store clerk operates the terminal 54 to request the seller-side bank computer 56 to cash in the check to the seller's account.
(S53) The seller-side bank computer 56 requests the inter-bank transaction system 55 to provide the fund.
(S54) The inter-bank transaction system 55 requests the issuing bank computer 52 to provide the fund.
(S55) The issuing bank computer 52 performs validation of the electronic check in question and withdrawal from the customer' deposit account. If the current balance of the customer A's account shows a sufficient deposit, the process skips to step S62. If not, steps S56 to S61 should be executed.
(S56) The issuing bank computer 52 requests its correspondent bank computer 57 to make a withdrawal.
(S57) The correspondent bank computer 57 initiates a withdrawal as requested, if the current balance of the customer A's account shows a sufficient deposit.
(S58) The correspondent bank computer 57 notifies the issuing bank computer 52 of the result of the withdrawal. That is, it reports the specifics if the requested withdrawal has successfully been finished. If it is unable to make a withdrawal due to a shortage of deposit, the correspondent bank computer 57 so notifies the issuing bank computer 52.

The issuing bank computer 52 receives the result notification from the correspondent bank computer 57. If the notification indicates successful completion, the issuing bank computer 52 advances its processing to step S62. If not, it goes to step S59.

(S59) The issuing bank computer 52 requests a credit company computer 58 to make a provisional payment.
(S60) If the remaining credit of the customer A allows it, the credit company computer 58 executes the payment as requested.
(S61) The credit company computer 58 notifies the issuing bank computer 52 of the result of the payment. That is, it reports the specifics when the requested payment has successfully been finished. When it is unable to execute the payment due to the insufficient remaining credit, the credit company computer 58 so notifies the issuing bank computer 52.
(S62) The issuing bank computer 52 executes processes of check management, fund transfer, and preparation of a bank statement.
(S63) The issuing bank computer 52 sends the created bank statement to the customer A.
(S64) The issuing bank computer 52 requests the inter-bank transaction system 55 to make a transfer.
(S65) The inter-bank transaction system 55 notifies the seller-side bank computer 56 of the transfer.
(S66) The seller-side bank computer 56 deposits the transferred money to the seller's account.
(S67) The seller-side bank computer 56 notifies the seller terminal 54 of the reception of money.
(S68) After confirming the completion notification, a clerk at the store B ships the ordered product to the customer A.

The above-described way of electronic check payments permits the store (seller) B to have the received electronic check cashed by their bank. This means that the terminal 54 need not to have a direct link to the issuing bank computer 52.
Also, the customer A can make patents to the seller-side bank computer 56 by using an electronic check. The next section provides processing steps of this method.

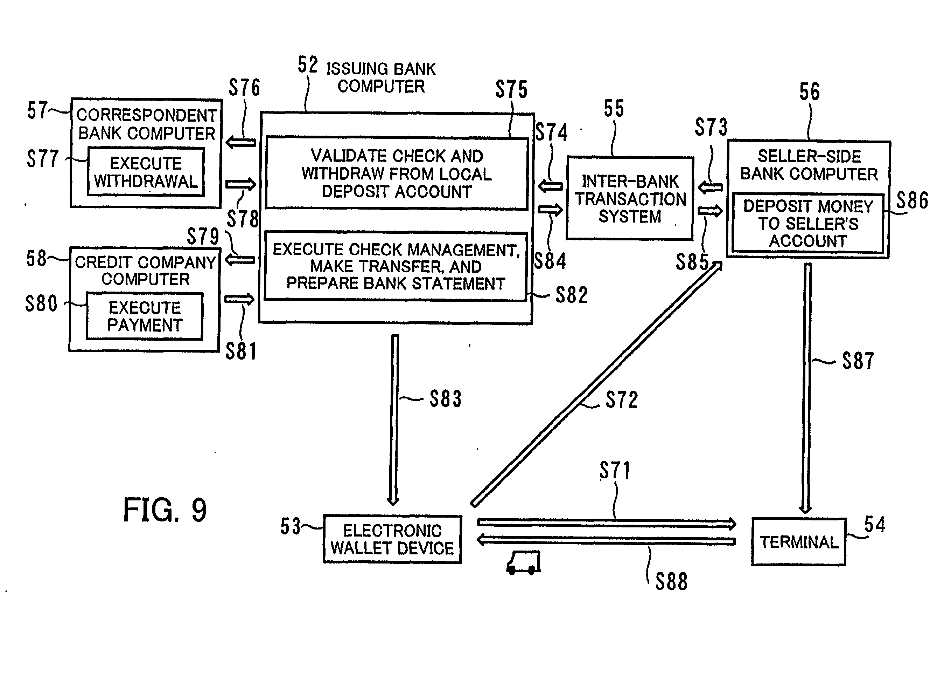

FIG. 9 is a diagram showing a fourth example of the proposed payment process.

(S71) A store (seller) B sends an invoice to a customer A to request a payment for a product that he/she purchased.

(S72) With his/her electronic wallet device 53, the customer A draws an electronic check to the seller-side bank computer 56 in order to pay the billed amount.

(S73) The seller-side bank computer 56 requests the inter-bank transaction system 55 to provide the fund.

(S74) The inter-bank transaction system 55 requests the issuing bank computer 52 to provide the fund.

(S75) Upon receipt of the request, the issuing bank computer 52 examines the authentication data of the electronic check in question, thereby ensuring that the origin of the check is the bank itself. After the validation, the issuing bank computer 52 attempts a withdrawal from the customer A's bank account being managed in itself. If the current balance of the customer A's account shows a sufficient deposit, the process skips to step S82. If not, steps S76 to S81 should be executed.

(S76) The issuing bank computer 52 requests its correspondent bank computer 57 to make a withdrawal.

(S77) The correspondent bank computer 57 initiates a withdrawal as requested, if the current balance of the customer A's account shows a sufficient deposit.

(S78) The correspondent bank computer 57 notifies the issuing bank computer 52 of the result of the withdrawal. That is, it reports the specifics if the requested withdrawal has successfully been finished. If it is unable to make a withdrawal due to a shortage of deposit, the correspondent bank computer 57 so notifies the issuing bank computer 52.

The issuing bank computer 52 receives the result notification from the correspondent bank computer 57. If the notification indicates successful completion, the issuing bank computer 52 advances its processing to step S82. If not, it executes remaining steps S79 to S81.

(S79) The issuing bank computer 52 requests a credit company computer 58 to make a payment.

(S80) If the remaining credit of the customer A allows it, the credit company computer 58 executes the payment as requested.

(S81) The credit company computer 58 notifies the issuing bank computer 52 of the result of the payment. That is, it reports the specifies when the requested payment has successfully been finished. When it is unable to execute the payment due to the insufficient remaining credit, the credit company computer 58 so notifies the issuing bank computer 52.

(S82) The issuing bank computer 52 executes processes of check management, fund transfer for payment, and preparation of a bank statement.

(S83) The issuing bank computer 52 sends the created bank statement to the customer A.

(S84) The issuing bank computer 52 requests the inter-bank transaction system 55 to make a transfer.

(S85) The inter-bank transaction system 55 notifies the seller-side bank computer 56 of the transfer.

(S86) The seller-side bank computer 56 deposits the transferred money to the seller's account.

(S87) The seller-side bank computer 56 notifies the seller terminal 54 that the money has been paid in.

(S88) After checking the completion notification, a clerk at the store B ships the ordered product to the customer A.

The above section have proposed various ways of electronic check processing. The sellers and customers can choose an appropriate option, depending on their own convenience.

The next section will now provide the details of a process of requesting issuance of electronic checks. Customers can request the issuing bank computer 52 to issue an electronic checkbook through an ATM directly linked thereto. Alternatively, they can make it with their electronic wallet device 53 which is connected to the issuing bank computer 52 via a network. The following section will explain the processing steps for these two oases.

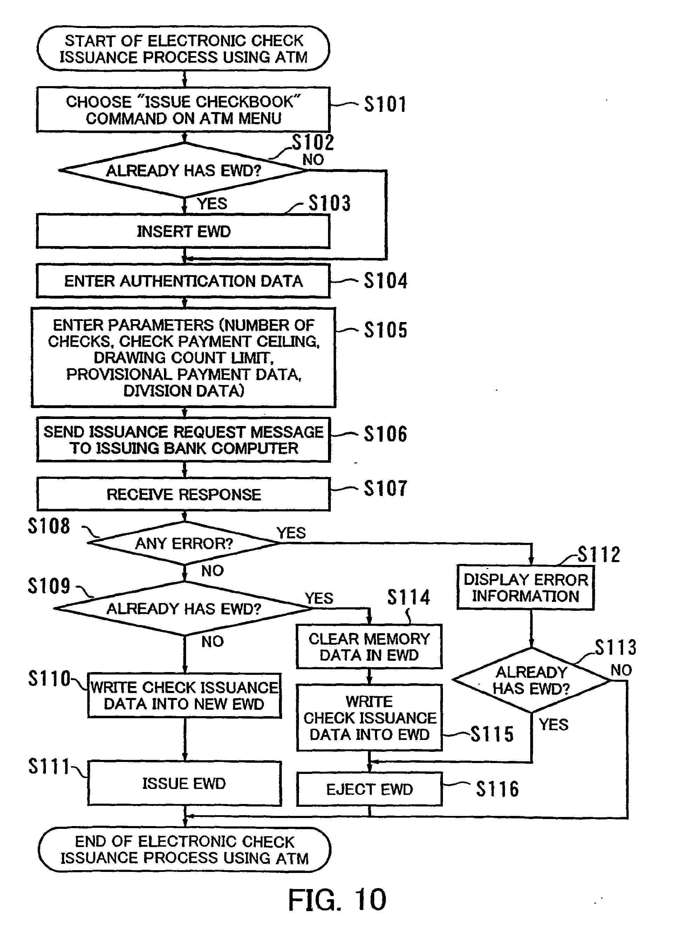

FIG. 10 is a flowchart which shows an electronic check issuance process using an ATM.

(S101) The customer A chooses "Issue Checkbook" command on an ATM menu screen.

(S102) It is determined whether the customer A already has an electronic wallet device (EWD). If he/she has it, the process advances to step S103. If not, the process skips to step S104.

(S103) The customer A inserts his/her electronic wallet device 53 to the ATM.

(S104) The customer A enters his/her user authentication data to the ATM.

(S105) The customer A enters several parameters that are required in the issuance processing. They include: the number of checks, check payment ceiling, drawing count limit, provisional payment data, and division data.

(S106) The ATM sends a message to the issuing bank computer 52 to request the issuance of new electronic checks.

(S107) The ATM receives a response from the issuing bank computer 52.

(S108) The ATM determines whether the response from the issuing bank computer 52 contains an error message. If any error message is found, the process branches to step S112. If no such messages are contained, the process advances to step S109.

(S109) The ATM determines whether the customer already has an electronic wallet device 53. If he/she has, the process branches to step S114. If not, the process advances to step S110.

(S110) The ATM writes check issuance data into a new electronic wallet device 53.

(S111) The ATM issues the electronic wallet device 53 and exits from the process.

(S112) The ATM displays the error status information on the monitor screen.

(S113) The ATM determines whether the customer already has an electronic wallet device 53. If so the process proceeds to step S116. If not, the process is terminated.

(S114) The ATM clears the current memory data in the electronic wallet device 53.

(S115) The ATM writes check issuance data into the inserted electronic wallet device 53.

(S116) The ATM ejects the electronic wallet device 53 and exits from the process.

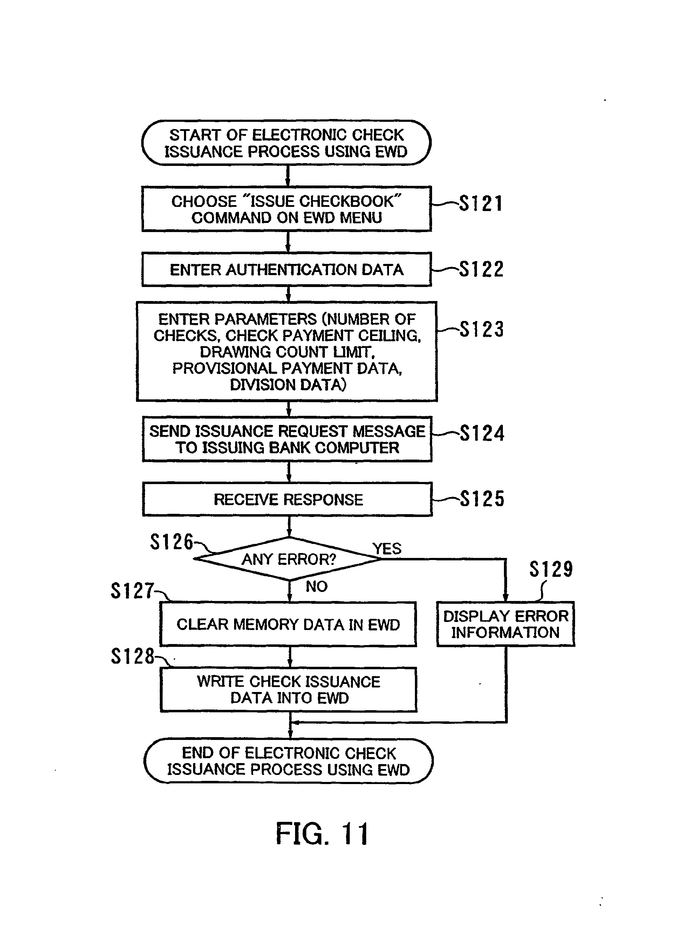

FIG. 11 is a flowchart which shows an electronic check issuance process using an electronic wallet device.

(S121) The customer A chooses "Issue Checkbook" command on a menu screen of the electronic wallet device 53.

(S122) The customer A enters his/her user authentication data to the ATM.

(S123) The customer A enters several parameters that are required in the issuance processing. They include: the number of checks, check payment ceiling, drawing count limit, provisional payment data, and division data.

(S124) The electronic wallet device 53 sends a message to the issuing bank computer 52 to request the issuance of new electronic checks.

(S125) The electronic wallet device 53 receive a response from the issuing bank computer 52.

(S126) The electronic wallet device 53 determines whether the response from the issuing bank computer 52 contains an error message. If any error message is found, the process branches to step S129. If no such messages are contained, the process advances to step S127.

(S127) The electronic wallet device 53 clears the current memory data in itself.

(S128) The electronic wallet device 53 writes check issuance data into its own memory and exits from the process.

(S129) The electronic wallet device 53 displays the error status information on a monitor screen.

In this way, the customer A requests the issuance of new electronic checks, and in response to this request, the issuing bank computer 52 executes a necessary process therefor.

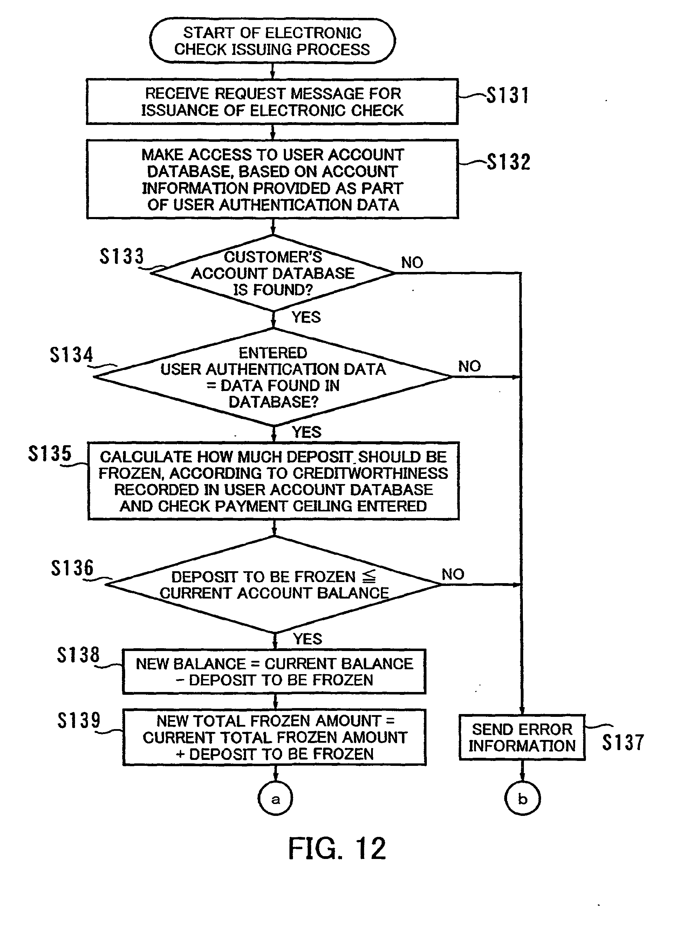

FIG. 12 is the first half of a flowchart showing an electronic check issuing process, which is automatically performed by the issuing bank computer 52 in response to a message requesting the issuance of new electronic checks.

(S131) The issuing bank computer 52 receives an electronic check issuance request from an ATM or electronic wallet device 53.

(S132) The computer 52 makes access to a customer account database, referring to account information provided as part of user authentication data.

(S133) The computer 52 searches the database to find the requesting customer's account. If the account is found, the process advances to step S134. If not found, the process branches to step S137.

(S134) The computer 52 determines whether the user authentication data entered from an ATM or the like is equal to what is found in the user account database. If so, the process advances to step S135. If not, the process branches to step S137.

(S135) The computer 52 calculates how much customer deposit should be frozen, according to the creditworthiness recorded in the user account database and the check payment ceiling entered from an ATM or the like.

(S136) The computer 52 determines whether the amount of deposit to be frozen does not exceed the current account balance. If the current balance of the customer's account shows a sufficient deposit, the process advances to step S138. If it is insufficient, the process branches to step S137.

(S137) The computer 52 sends error information back to the requesting device.

(S138) The computer 52 calculates the new account balance by subtracting the determined frozen amount from the current account current balance.

(S139) The computer 52 updates the total frozen amount by adding the determined frozen amount to the current total frozen amount.

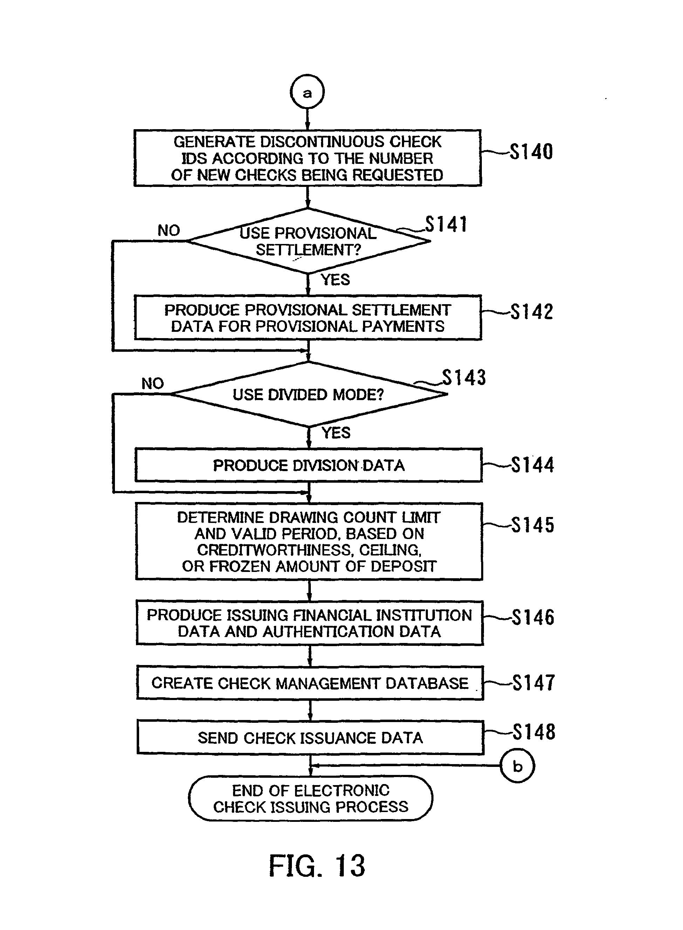

FIG. 13 is the second half of the same flowchart.

(S140) The computer 52 generates discontinuous check IDs according to the number of new checks being requested.

(S141) The computer 52 determines whether to allow the customer to use provisional settlement schemes. If the customer uses provisional settlement, the process advances to step S142. If not, the process skips to step S143.

(S142) The computer 52 produces data for provisional settlement with provisional payments.

(S143) The computer 52 determines whether to allow the customer to redraw an electronic check in divided mode. If the customer wishes it, the process advances to step S144. If not, the process proceeds to step S145.

(S144) The computer 52 produces division data.

(S145) The computer 52 determines the drawing count limit and the valid period on the basis of the customer's creditworthiness, the ceiling, or the amount of the frozen deposit.

(S146) The computer 52 produces data about the issuing financial institution, as well as authentication data.

(S147) The computer 52 creates a check management database to manage various data produced above.

(S148) The computer 52 sends check issuance data to the requesting device, including all the data produced above. In this way, new electronic checks are issued.

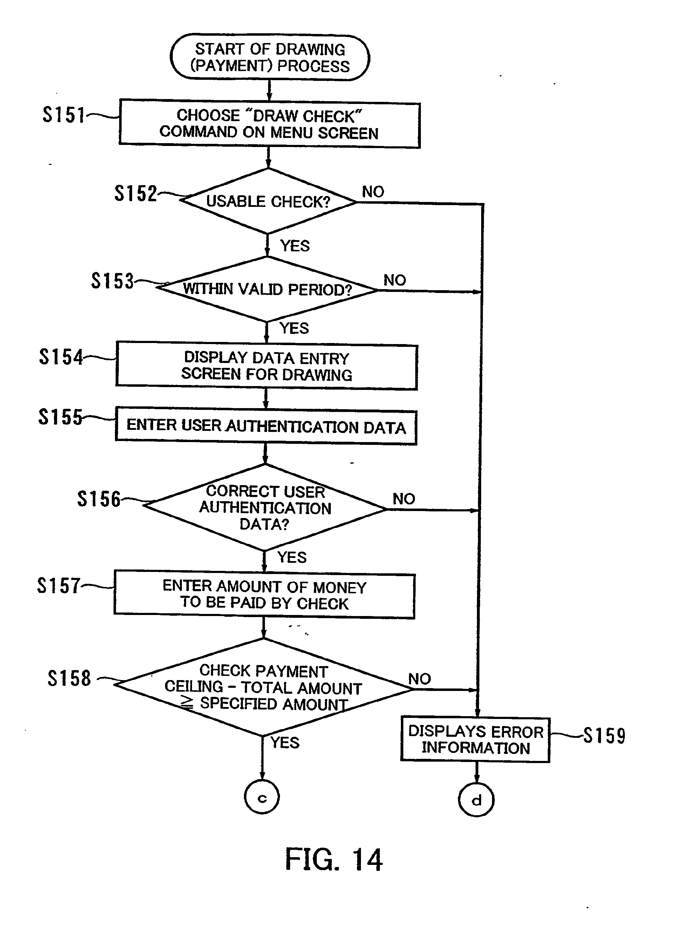

FIG. 14 is the first half of a flowchart showing a drawing (payment) process.

(S151) The customer A chooses "Draw Check" command on a menu screen of his/her electronic wallet device 53.

(S152) The electronic wallet device 53 determines whether the new electronic check to be drawn is usable. If is usable, the process advances to step S153. If not, the process branches to step S159.

(S153) The electronic wallet device 53 determines whether the present date and time is within the valid period of the electronic check. If it is within the valid period, the process advances to step S154. If not, the process branches to step S159.

(S154) The electronic wallet device 53 displays a data entry screen for drawing.

(S155) The customer A enters his/her user authentication data.

(S156) The electronic wallet device 53 determines whether the entered user authentication data is equal to what is stored in its internal memory. If so, the process advances to step S157. If not, the process branches to step S159.

(S157) The customer A enters the amount of money to be paid.

(S158) The electronic wallet device 53 determines whether the following condition is satisfied.

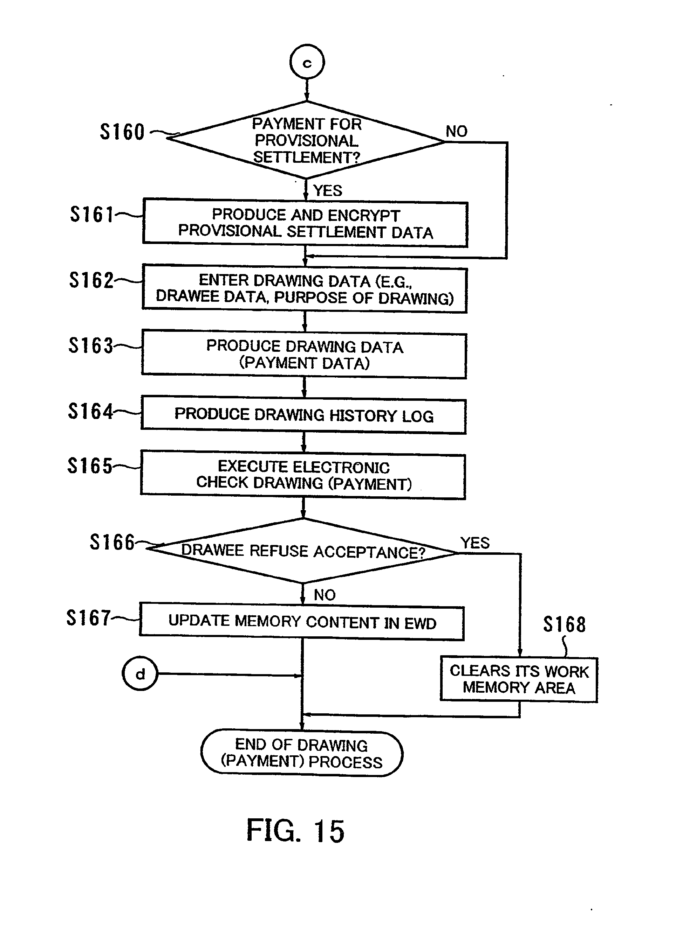

Ceiling - Total Amount $\geqq$ Specified Amount where "Ceiling" refers to the check payment ceiling, "Total Amount" is the total amount of past payments, and "specified Amount" means the amount of money that the customer is paying this time. If this condition is satisfied, the process advances to step S160 (FIG. 15). If not, the process proceeds to step S159.

(S159) The electronic wallet device 53 displays error information on a monitor soreen.

FIG. 15 is the second half of the same drawing (payment) process.

(S160) The electronic wallet device 53 determines whether the present payment is intended for provisional settlement. If so, the process advances to step S161. If not, the process skips to step S162.

(S161) The electronic wallet device 53 produces provisional settlement data and encrypts the data by using blinding techniques.

(S162) The customer A enters some items of drawing data (e.g., drawee data, purpose of drawing).

(S163) The electronic wallet device 53 produces drawing data (payment data) on its memory. This drawing data contains the following data items:

- Date and Time of Drawing
- Drawee Data
- Check Type
- Provisional Settlement Data
- Valid Period
- Division Data
- Freeze Data
- Amount to be Paid
- Purpose
- Check ID
- Drawer Data

(S164) The electronic wallet device 53 produces a drawing history log.

(S165) The electronic wallet device 53 draws the electronic check to accomplish the payment.

(S166) The electronic wallet device 53 determines whether the drawee refuses or accepts the electronic check drawn. If the check is refused, the process skips to step S168. If the electronic check is accepted, the process advances to step S167.

(S167) The electronic wallet device 53 updates usage data and drawing history log in its memory, and exits from the process.

(S168) The electronic wallet device 53 clears its work memory area and exits from the process.

In this way, the customer draws an electronic check. The above-described process has assumed that the customer has a new electronic check obtained from the issuing bank. However, that process does not apply when the bearer attempts to reuse, or redraw, an electronic check that has been drawn by other people. The following section will discuss such oases.

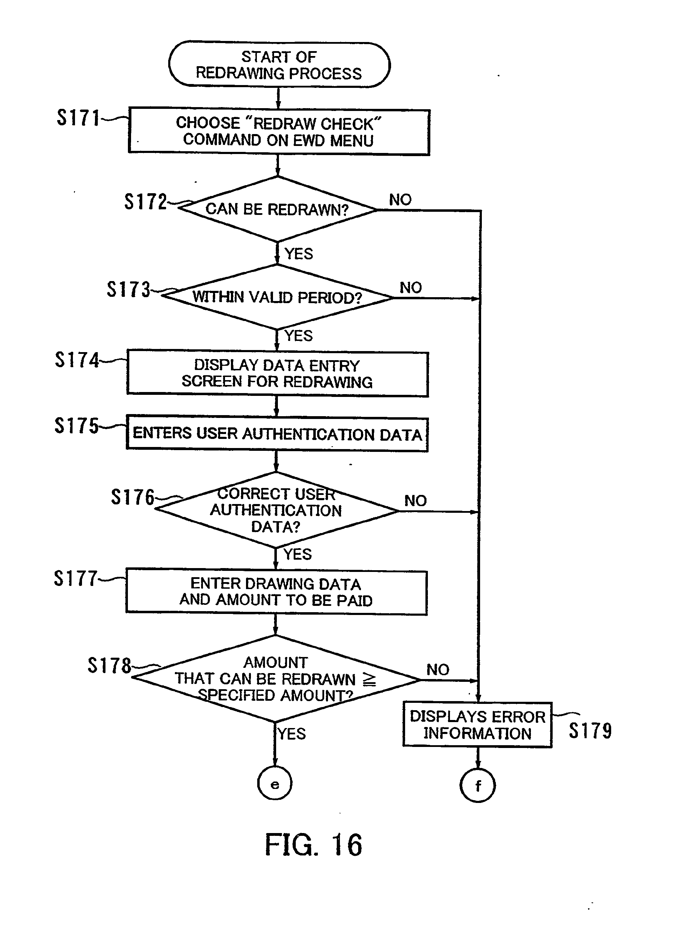

FIG. 16 is the first half of a flowchart showing a process to redraw a received electronic check.

(S171) The customer A chooses "Redraw Check" command on a menu screen of his/her electronic wallet device 53.

(S172) The electronic wallet device 53 determines whether the electronic check can be redrawn. If it can be redrawn, the process advances to step S173. If not, the process branches to step S179.

(S173) The electronic wallet device 53 determines whether the present date and time is within the valid period of the electronic check. If it is within the valid period, the process advances to step S174. If not, the process branches to step S179.

(S174) The electronic wallet device 53 displays a data entry screen for redrawing.

(S175) The customer A enters his/her user authentication data.

(S176) The electronic wallet device 53 determines whether the entered user authentication data is equal to what is stored in its internal memory. If so, the process advances to step S177. If not, the process branches to step S179.

(S177) The customer A enters some items of drawing data (e.g., drawee data, purpose of drawing), as well as specifying the amount of money he/she wishes to pay.

(S178) The electronic wallet device 53 determines whether the following condition is satisfied.

Amount that can be redrawn ≧ Specified Amount If this condition is satisfied, the process advances to step S180. If not, the process proceeds to step S179.

(S179) The electronic wallet device 53 displays error information on a monitor screen.

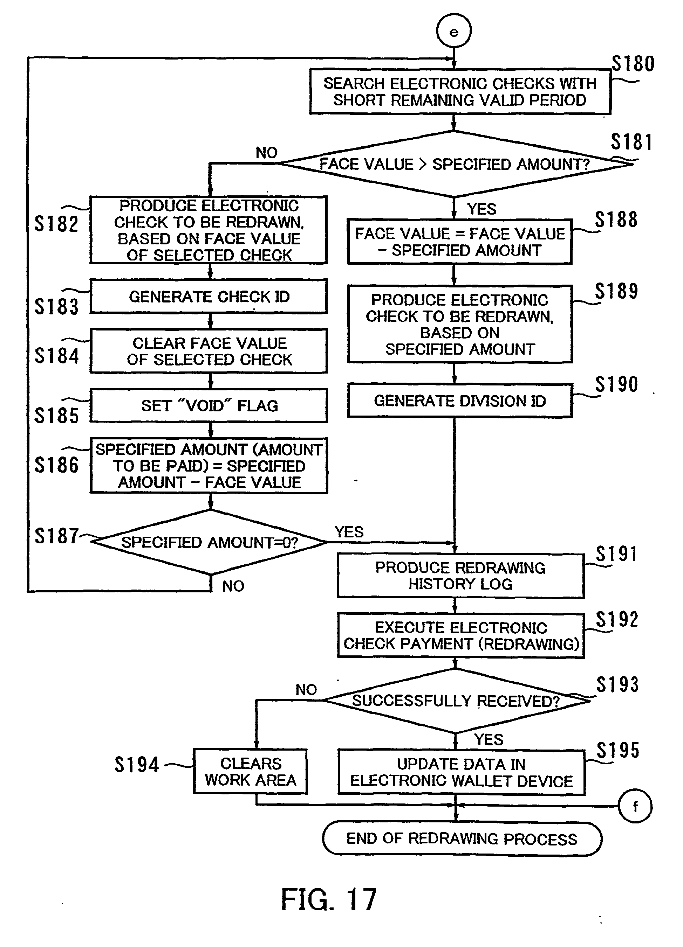

FIG. 17 is the second half of the flowchart of the redrawing process.

(S180) The electronic wallet device searches for an electronic check whose remaining valid period is relatively short. If there are two or more such checks, it selects the one having the shortest remaining period.

(S181) The electronic wallet device determines whether the written value of that check satisfies the following condition.

Written Value > Specified Amount

If this condition is satisfied, the process advances to step S182. If not, the process proceeds to step S188.

(S182) For redrawing, the electronic wallet device derives an electronic check from the electronic check selected at step S180.

(S183) The electronic wallet device produces a check ID for the produced electronic check.

(S184) The electronic wallet device clears the face value of the selected electronic check to zero.

(S185) The electronic wallet device sets the "Void" flag of the selected electronic check to "ON."

(S186) The electronic wallet device subtracts the face value of the selected electronic check from the specified amount (amount to be paid). It then substitutes the resultant value for the specified amount.

(S187) The electronic wallet device determines whether the specified amount has reached zero. If so, the process advances to step S191. If not, the process returns to step S180 to seek another appropriate electronic check.

(S188) The electronic wallet device subtracts the specified amount from the face value of the selected electronic check. It then substitutes the resultant value for the face value of the selected electronic check.

(S189) The electronic wallet device produces an electronic check for redrawing, on the basis of the specified amount (amount to be paid).

(S190) The electronic wallet device generates a division ID which will be added to the electronic check to be redrawn.

(S191) The electronic wallet device produces a redrawing history log.

(S192) The electronic wallet device redraws the electronic check(s) to accomplish the payment.

(S193) The electronic wallet device determines whether the payee has successfully received the payment. If so, the process advances to step S195. If not, the process proceeds to step S194.

(S194) The electronic wallet device 53 clears its work memory area and exits from the process.

(S195) The electronic wallet device 53 updates relevant data in its memory, and exits from the process.

In this way, the electronic wallet device automatically chooses suitable electronic checks and executes a redrawing operation with them. The electronic check drawn or redrawn as such is then subjected to a reception process when it arrives at the seller's terminal. The next section will discuss the details of this reception process.

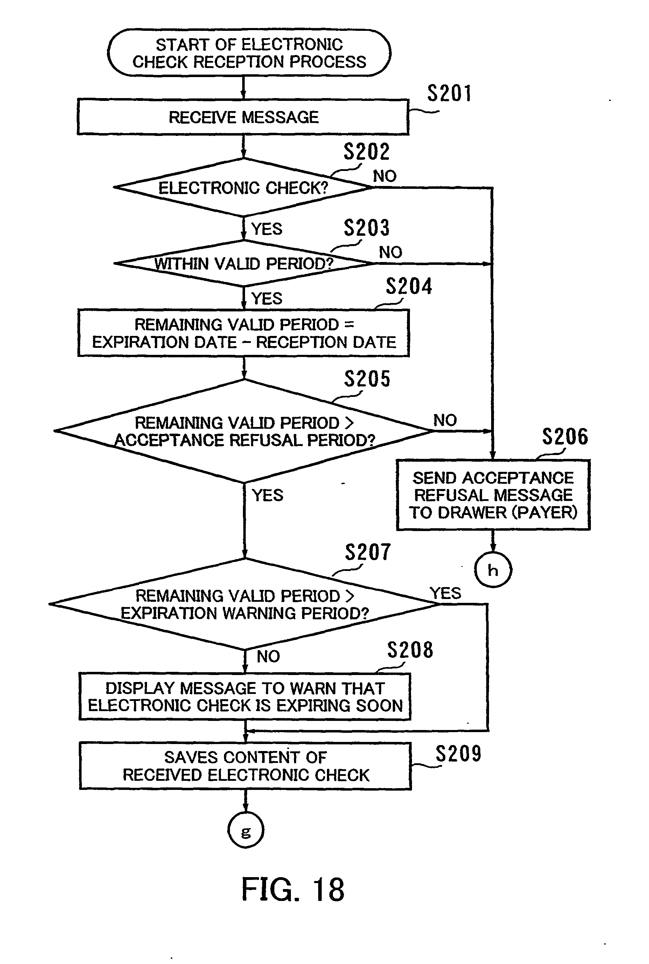

FIG. 18 is the first half of a flowchart showing a process of receiving an electronic check. This process is executed by the terminal 54 at the receiving end.

(S201) The terminal 54 receives a message from the drawer's electronic wallet device 53.

(S202) The terminal 54 determines what has been drawn. If it is an electronic check, the process advances to step S203. If not, the process branches to step S206.

(S203) The terminal 54 determines whether the present date and time is within the valid period of the electronic check. If it is within the valid period, the process advances to step S204. If not, the process branches to step S206.

(S204) The terminal 54 calculates the difference between the expiration date and the reception date of the electronic check. The resultant value is recorded as the remaining valid period.

(S205) The terminal 54 determines whether the remaining valid period is longer than a predetermined acceptance refusal period. If so the process skips to step S207. If not, the process advances to step S206. Here, the acceptance refusal period is a time period previously determined at the seller's terminal, intending to avoid the acceptance of such electronic checks whose remaining validity is unreasonably short.

(S206) The terminal 54 sends an acceptance refusal message to the drawer and exits from the process.

(S207) The terminal 54 determines whether the remaining valid period is longer than a predetermined expiration warning period. If so, the process skips to step S209. If not, the process advances to step S208.

(S208) The terminal 54 displays an alarm message on a monitor screen to warn that the electronic check is expiring soon.

(S209) The terminal 54 saves the content of the received electronic check into its internal memory.

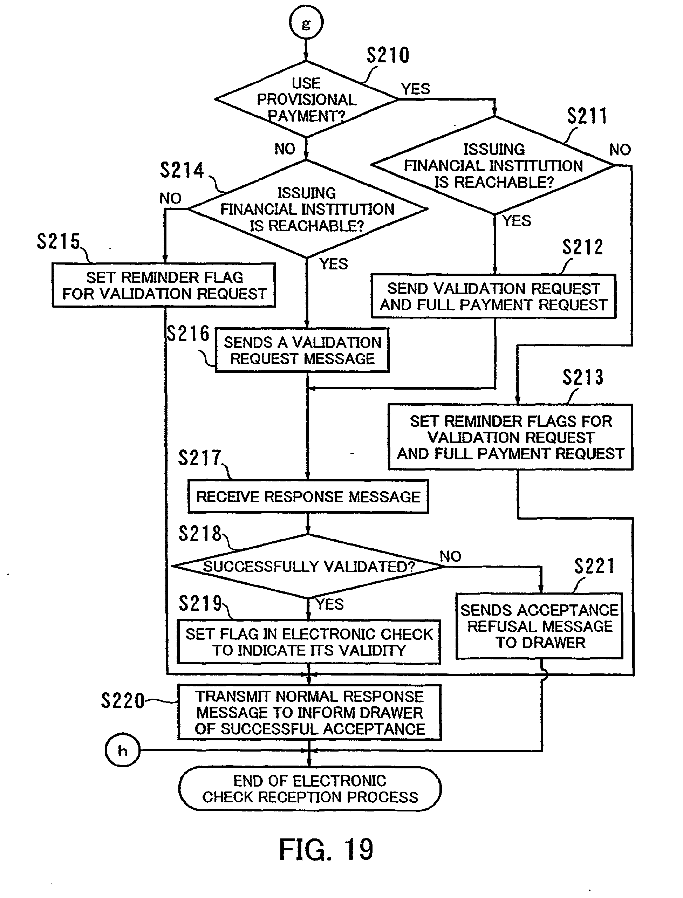

FIG. 19 is the second half of the electronic check reception process.

(S210) The terminal 54 determines whether the drawer intends to use a provisional payment scheme. If so, the process advances to step S211. If not, the process proceeds to step S214.

(S211) The terminal 54 determines whether the issuing financial institution is reachable. If reachable, the process advances to step S212. If not reachable, the process proceeds to step S213.

(S212) By sending messages, the terminal 54 requests the issuing financial institution to validate the received electronic check and make a full payment with that amount. The process then advances to step S217.

(S213) The terminal 54 sets some reminder flags to remind itself of the pending validation request and full payment request. The process then advances to step S220.

(S214) The terminal 54 determines whether the issuing financial institution is reachable. If reachable, the process advances to step S216. If not reachable, the process proceeds to step S215.

(S215) The terminal 54 sets a reminder flag to remind itself of the pending validation request. The process then advances to step S220.

(S216) The terminal 54 sends a validation request message, requesting the issuing financial institution to validate the received electronic check.

(S217) The terminal 54 receives a response message.

(S218) The terminal 54 determines whether the issuing financial institution has successfully validated the electronic check. If it was successful, the process advances to step S219. If it failed, the process branches to step S221.

(S219) The terminal 54 sets a certain flag in a data area of the electronic check to indicate that the electronic check is valid.

(S220) The terminal 54 transmits a normal response message to inform the drawer of the successful acceptance, and then exits from the process.

(S221) The terminal 54 sends an acceptance refusal message to the drawer and exits from the process.

In this way, the terminal 54 receives an electronic check. While the remaining valid period is checked at the beginning of the above deception process, the validity of electronic checks may also be checked at regular internal after they are received. In this case, the system may be configured to display a warning message on a monitor screen when it finds an electronic check that is expiring soon.

Lastly, several methods to generate check IDs will be described below. When dividing a received electronic check for the purpose of redrawing, additional check IDs should be assigned to the divided checks. To this end, three methods will be described below.

FIG. 20 shows a first check ID assignment method. As seen from this diagram, the check IDs are extended in a hierarchical manner. This method is thus referred to herein as the hierarchical method.

In the example of FIG. 20, there is an original electronic check 110 provided by an issuing bank computer. Initially, this electronic check with a face value 110b of 100,000 yen is assigned a check ID 110a of "100001." Later, this electronic check 110 is divided into two electronic checks 111 and 112. Besides inheriting the original check ID, these new electronic checks gain sequential numbers as an extension to their respective IDs, thus forming a hierarchical structure of IDs. Specifically, one divided electronic check 111 with a value 111b of 9,000 yen is assigned a check ID 111a of "100001 +1." The other divided electronic check 11 with a value 112b of 91,000 yen has a check ID 112a of "100001 +2." The electronic check 112 can also be divided in a similar manner. Consider, for example, that this electronic check 112 is divided into two electronic checks 113 and 114. Specifically, FIG. 20 shows that the electronic check 113 with a value 113b of 90,000 yen has a check ID 113a of "100001 +2 +1," and that the electronic check 114 with a value 114b of 1,000 yen has a check ID 114a of "100001 +2 +2." By extending the check ID in this way, one can trace back to the root electronic check.

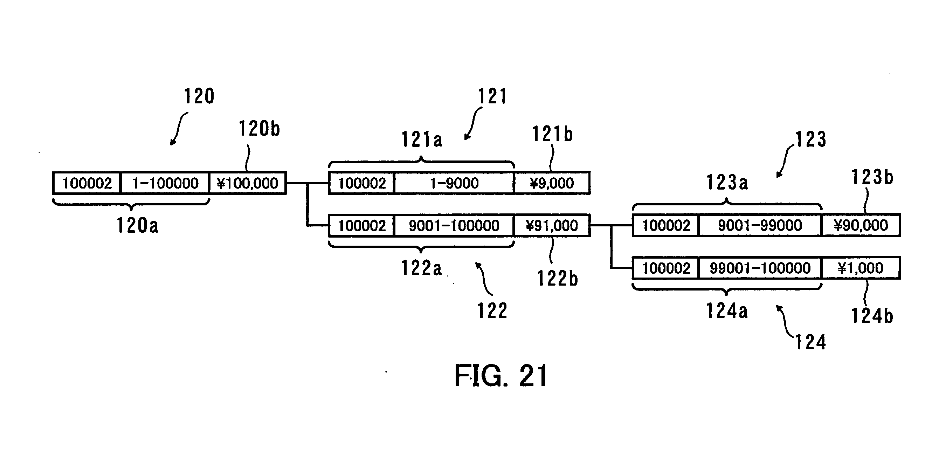

FIG. 21 shows a second check ID assignment method, as used according to the claimed invention. As seen from this diagram, the check ID of an electronic check includes a data field showing a certain numerical range that is determined in connection with the face value of that check. When a check is divided, the check ID of each divided check is determined on the basis of how the original face value is divided. This method is referred to as the value range sequence method.

In the example of FIG. 21, there is an original electronic check 120 provided by an issuing bank computer. Initially, this electronic check with a face value 120b of "100,000 yen" is assigned a check ID 120a of "100002 + 1-100000." Later, this electronic check 120 is divided into two checks 121 and 122. Besides inheriting the first part of the original check ID, each new electronic check gains a new face value range. Specifically, FIG. 20 shows that one divided electronic check 121 with a value 121b of "9,000 yen" is assigned a check ID 121a of "100002 + 1-9000." Likewise, the other divided electronic check 122 with a value 122b of "91,000 yen" has a check ID of "100002 + 9001-10000." This electronic check 122 is further divided into two checks 123 and 124. The electronic check 123 with a value 123b of 90,000 yen has a check ID 123a of "100002 + 9001-99000," and the electronic check 124 with a value 124b of 1,000 yen has a check ID 124a of "100002 + 99001-100000."

As seen from the above example, one numerical range given as part of the original check ID is divided into a plurality of ranges, depending on the divided face values. The resultant ranges are assigned to the divided electronic checks as part of their respective check IDs. Because the original numerical range "1-100000" is simply divided into pieces, there will be no overlaps among the resultant ranges. While their check IDs start with the same value "100002," the divided checks will each have a unique extension. The proposed algorithm guarantees the uniqueness of check IDs, thus avoiding duplication of electronic checks. That is, if there are two electronic checks having overlapping numerical ranges in their check IDs, either one of them must be illegal.

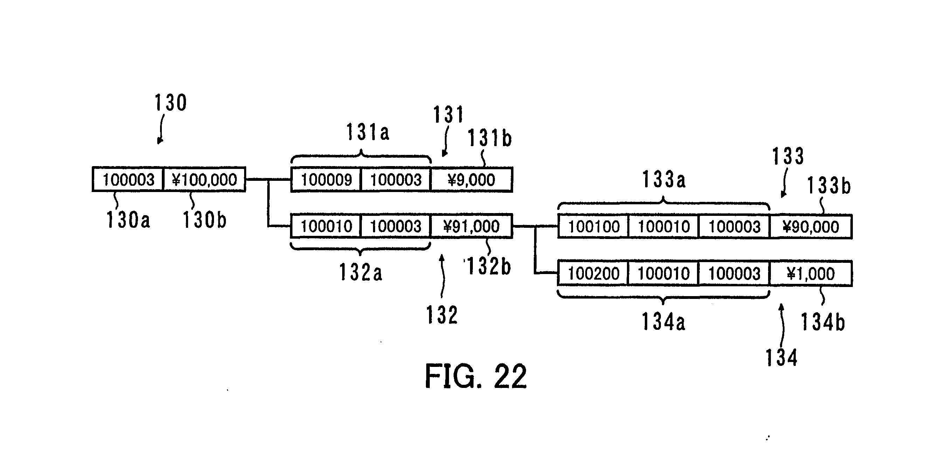

FIG. 22 shows a third check ID assignment method. In this method, the issuing bank reassigns a new check ID each time an electronic check is divided. This is referred to herein as the reassignment method.

In the example of FIG. 20, there is an original electronic check 130 provided by an issuing bank computer. Initially, this electronic check with a face value 130b of 100,000 yen is assigned a check ID 130a of "100003." To have this electronic check 130 divided into two checks, the bearer sends it to the issuing bank computer. The computer sends back two electronic checks 131 and 132, each of which has a new check ID being concatenated before the original ID. Specifically, FIG. 20 shows that one divided electronic check 131 with a value 131b of 9,000 yen is assigned a check ID 131a of "100009 + 100003." Likewise, the other divided electronic check 132 with a value 132b of 91,000 yen has a check ID of "100010 + 100003." Consider here that the electronic check 132 is further divided into two checks 133 and 134. The electronic check 133 with a value 133b of 90,000 yen will have a check ID 133a of "100100 + 100010 + 100003," and the electronic check 134 with a value 134b of 1,000 yen will have a check ID 134a of "100200 + 100010 + 100003."

In the above-described third method, the issuing bank determines new numbers in such a way that no one can guess the numbers or find any regularity in their sequence. The third method also allows the bearer of a plurality of electronic checks to consolidate them into a single electronic check with a new check ID by sending them to the issuing bank. The bearer can redraw the consolidated electronic check to any other party. In this case, the original electronic checks will be frozen in the issuing bank.

While the above explanation of the three methods has assumed the use of numerals for composing check IDs, it is possible to use any other characters and symbols, including alphabets.

The electronic check system described above will provide the following advantages.

First, the proposed system freezes the customer's deposit account in whole or in part, depending on a specified check payment ceiling and the customer's creditworthiness, before issuing electronic checks to him/her. This feature greatly reduces the risk of dishonor of the issued checks, thus providing them with increased credibility in the market.

Also, a customer can use a plurality of electronic checks as long as the total amount of payments is within a predetermined check payment ceiling. Electronic checks provide excellent usability which is comparable to electronic money, thus being suitable for the circulation in the market.

Second, the proposed system allows the drawee to see the check payment ceiling and the amount of the drawer's bank deposit. This feature helps the drawee to determine whether to accept an electronic check being offered.

Third, the proposed system assigns discontinuous and irregular check IDs which cannot be guessed. This feature prevents electronic checks from being forged by someone.

Fourth, the proposed system permits customers to divide and redraw their electronic checks to third parties. This feature makes electronic checks as usable as electronic money, and more suitable for the circulation in the market.

Lastly, the proposed system enables customers to use an electronic check for a provisional payment. They can put off the full payment until they receive a product they purchased. This eliminates the possibility that customers would miss the purchased products in spite of payments they made.

The above-described processing mechanisms of various computers, electronic wallet devices, and terminals are actually implemented as software functions of a computer system. In that case, the proposed processing steps are encoded in the form of computer programs, which will be stored in a computer-readable storage medium. The computer system executes those programs to provide the intended functions of the present invention. Suitable computer-readable storage media include magnetic storage media and semiconductor memory devices. Particularly, portable storage media, such as CD-ROMs and floppy disks, are suitable for circulation purposes. Further, it will be possible to distribute the programs through an appropriate server computer deployed on a network. Program files delivered to users are normally installed in their computers' hard drive or other local mass storage devices, which will be executed after being loaded to the main memory.

As seen from the above explanation, there is provided an electronic check system which determines an appropriate ceiling on check payments when issuing electronic checks, so that the payments will be made always within that ceiling. This feature eliminates the possibility of overtrading by a customer who requested the issuance of checks, and thus prevents the issued electronic checks from being dishonored. Customers, on the other hand, can fully enjoy the excellent usability of electronic checks as long as they are properly used within the predetermined check payment ceiling.

There is also provided a financial data management system which determines an appropriate ceiling on check payments when issuing electronic checks, within the capacity of a customer who requested the issuance. This feature guarantees the cashability of electronic checks, as well as prevents them from being dishonored. Customers, on the other hand, can fully enjoy the excellent usability of electronic checks as long as they are properly used within the predetermined check payment ceiling.

There is provided an electronic check management unit which does not draw an electronic check exceeding a predetermined check payment ceiling. This feature eliminates the possibility of overtrading by a customer who requested the issuance of checks, and thus prevents the issued checks from being dishonored. Customers, on the other hand, can fully enjoy the excellent usability of electronic checks as long as they are properly used within the predetermined check payment ceiling.

There is provided a computer-readable medium storing an electronic check management program which causes a computer to determine an appropriate ceiling on check payments when issuing electronic checks, within the capacity of a customer who requested the issuance. The electronic checks issued in this way are unlikely to be dishonored. In addition, the customers can fully enjoy the excellent usability of electronic checks as long as they are properly used within the predetermined check payment ceiling.

## Claims

1. An electronic check management unit (30) which manages data of electronic checks, comprising:

   electronic check accepting means (31) for accepting an electronic check (120) that has been drawn, the electronic check having data including a face value (120b) indicating an amount of money to be paid and a check ID (120a) having a first part and a second part, wherein the second part is a numerical range defined by upper and lower end values of the range, the difference between the upper and lower end values being equal to the face value-1 of the electronic check;
   cashing request means (32), responsive to a cashing command, for sending a cashing request, together with the electronic check, to a financial data management system (10) that issued the electronic check; and
   redrawing means (33), responsive to a redrawing command, for dividing the electronic check (120) received by said electronic check accepting means (31) and redrawing the divided electronic checks (121, 122), when a predefined dividing condition is satisfied;

wherein the redrawing means (33) performs said dividing and redrawing without communicating with the financial data management system (10); and

said redrawing means (33) divides the numerical range of the second part into a plurality of subranges, depending on the respective new face values (121b, 122b) of the divided electronic checks (121, 122), in such a way that there will be no overlaps among the resultant subranges, and such that each new subrange will be defined by upper and lower end values of the subrange, the difference between the upper and lower end values being equal to the new face value-1 of the new electronic check,

whereby the redrawing means (33) assigns to each divided electronic check (121, 122) a new check ID comprising a first part of the check ID of the check (120) which has been divided and the new subrange corresponding to the face value (121, 122b) of that new divided check (121, 122).

2. The electronic check management unit (30) according to claim 1, wherein:

the data of each electronic check (120) includes a valid period;
said electronic check accepting means (31) has received a plurality of electronic checks; and
said redrawing means (33) redraws one of the plurality of electronic checks whose remaining valid period is shorter than those of other electronic checks.

3. The electronic check management unit (30) according to claim 1 or 2, wherein the data of each electronic check (120) includes a valid period, and said electronic check accepting means (31) refuses acceptance of an electronic check whose remaining valid period is shorter than a predetermined threshold.

4. The electronic check management unit (30) according to any preceding claim, wherein the data of each electronic check (120) includes a valid period, and further comprising warning means for displaying a warning message when the electronic check has a remaining valid period shorter than a predetermined threshold.

**Patentansprüche**

1. Elektronische Scheckmanagementeinheit (30), die Daten von elektronischen Schecks verwaltet und die Folgendes umfasst:

elektronische Scheckannahmemittel (31) zum Annehmen eines elektronischen Schecks (120), der gezogen wurde, wobei der elektronische Scheck Daten aufweist, die einen Nennwert (120b), der einen zu bezahlenden Geldbetrag angibt, und eine Scheck-ID (120a) umfassen, die einen ersten Abschnitt und einen zweiten Abschnitt aufweist, wobei der zweite Abschnitt ein numerischer Wertebereich ist, der durch obere und untere Endwerte des Wertebereichs abgegrenzt ist, wobei die Differenz zwischen den oberen und den unteren Endwerten gleich dem Nennwert des elektronischen Schecks -1 ist;

Einlösungsaufforderungsmittel (32), die auf einen Einlösungsbefehl reagieren, um eine Einlösungsaufforderung gemeinsam mit dem elektronischen Scheck an ein Finanzdaten-Verwaltungssystem (10) zu senden, das den elektronischen Scheck ausgestellt hat; und

Mittel (33) zum erneuten Ziehen als Reaktion auf einen Befehl zum erneuten Ziehen, zum Teilen des von dem elektronischen Scheckannahmemittel (31) empfangenen elektronischen Schecks (120) und zum erneuten Ziehen der geteilten elektronischen Schecks (121, 122), wenn eine vorbestimmte Teilungsbedingung erfüllt ist;

wobei das Mittel (33) zum erneuten Ziehen das Teilen und erneute Ziehen durchführt, ohne mit dem Finanzdaten-Verwaltungssystem (10) zu kommunizieren; und

das Mittel (33) zum erneuten Ziehen den numerischen Wertebereich des zweiten Abschnitts in mehrere Unterabschnitte teilt, die von den entsprechenden neuen Nennwerten (121b, 122b) der geteilten elektronischen Schecks (121, 122) abhängig sind, derart, dass keine Überschneidungen zwischen den resultierenden Unterwertebereichen vorhanden sein werden, und derart, dass jeder neue Unterwertebereich durch obere und untere Endwerte des Unterwertebereichs abgegrenzt wird, wobei die Differenz zwischen den oberen und unteren Endwerten gleich dem neuen Nennwert des neuen elektronischen Schecks -1 ist,

wobei die Mittel (33) zum erneuten Ziehen jedem geteilten elektronischen Scheck (121, 122) eine neue Scheck-ID zuweisen, die einen ersten Abschnitt der Scheck-ID des Schecks (120), der geteilt wurde, und den neuen Unterwertebereich umfasst, der dem Nennwert (121b, 122b) dieses neuen geteilten Schecks (121, 122) entspricht.

2. Elektronische Scheckmanagementeinheit (30) nach Anspruch 1, wobei:

die Daten von jedem elektronischen Scheck (120) einen Gültigkeitszeitraum umfassen;
wobei das elektronische Scheckannahmemittel (31) mehrere elektronische Schecks empfangen hat; und
das Mittel (33) zum erneuten Ziehen einen der mehreren elektronischen Schecks, dessen verbleibender Gültigkeitszeitraum kürzer ist als diejenigen von anderen elektronischen Schecks, erneut zieht.

3. Elektronische Scheckmanagementeinheit (30) nach Anspruch 1 oder 2, wobei die Daten von jedem elektronischen Scheck (120) einen Gültigkeitszeitraum umfassen und das elektronische Scheckannahmemittel (31) die Annahme eines elektronischen Schecks, dessen verbleibender Gültigkeitszeitraum kürzer ist als ein vorbestimmter Schwellenwert, ablehnt.

4. Elektronische Scheckmanagementeinheit (30) nach einem der vorhergehenden Ansprüche, wobei die Daten von jedem elektronischen Scheck (120) einen Gültigkeitszeitraum umfassen, und die ferner ein Warnmittel zum Anzeigen einer Warnmeldung umfasst, wenn der elektronische Scheck einen verbleibenden Gültigkeitszeitraum aufweist, der kürzer ist als ein vorbestimmter Schwellenwert.

**Revendications**

1. Unité de gestion de chèque électronique (30) qui gère des données de chèques électroniques, comprenant :

des moyens d'acceptation de chèque électronique (31) pour accepter un chèque électronique (120) qui a été tiré, le chèque électronique ayant des données comportant une valeur faciale (120b) indiquant un montant d'argent à payer et un ID de chèque (120a) ayant une première partie et une seconde partie, où la seconde partie est une plage numérique définie par des valeurs limites supérieure et inférieure de la plage, la différence entre les valeurs limites supérieure et inférieure étant égale à la valeur faciale -1 du chèque électronique ;
des moyens de demande d'encaissement (32), en réponse à une commande d'encaissement, pour envoyer une demande d'encaissement, conjointement avec le chèque électronique, à un système de gestion de données financières (10) qui a émis le chèque électronique ; et
des moyens de retirage (33), en réponse à une commande de retirage, pour diviser le chèque électronique (120) reçu par lesdits moyens d'acceptation de chèque électronique (31) et retirer les chèques électroniques divisés (121, 122), lorsqu'une condition de division prédéfinie est satisfaite ;
dans laquelle les moyens de retirage (33) effectuent ladite division et ledit retirage sans communiquer avec le système de gestion de données financières (10) ; et
lesdits moyens de retirage (33) divisent la plage numérique de la seconde partie en une pluralité de sous-plages, en fonction des nouvelles valeurs faciales respectives (121b, 122b) des chèques électroniques divisés (121, 122), de telle sorte qu'il n'y ait pas de chevauchements entre les sous-plages résultantes, et de sorte que chaque nouvelle sous-plage soit définie par des valeurs limites supérieure et inférieure de la sous-plage, la différence entre les valeurs limites supérieure et inférieure étant égale à la nouvelle valeur faciale -1 du nouveau chèque électronique,
moyennant quoi les moyens de retirage (33) affectent à chaque chèque électronique divisé (121, 122) un nouvel ID de chèque comprenant une première partie de l'ID de chèque du chèque (120) qui a été divisé et la nouvelle sous-plage correspondant à la valeur faciale (121b, 122b) de ce nouveau chèque divisé (121, 122).

2. Unité de gestion de chèque électronique (30) selon la revendication 1, dans laquelle :

les données de chaque chèque électronique (120) comportent une période valide ;
lesdits moyens d'acceptation de chèque électronique (31) ont reçu une pluralité de chèques électroniques ; et
lesdits moyens de retirage (33) retirent un de la pluralité de chèques électroniques dont la période valide restante est plus courte que celle d'autres chèques électroniques.

3. Unité de gestion de chèque électronique (30) selon la revendication 1 ou 2, dans laquelle les données de chaque chèque électronique (120) comportent une période valide, et lesdits moyens d'acceptation de chèque électronique (31) refusent l'acceptation d'un chèque électronique dont la période valide restante est plus courte qu'un seuil prédéterminé.

4. Unité de gestion de chèque électronique (30) selon l'une quelconque des revendications précédentes, dans laquelle les données de chaque chèque électronique (120) comportent une période valide, et comprenant en outre des moyens d'avertissement pour afficher un message d'avertissement lorsque le chèque électronique a une période valide restante plus courte qu'un seuil prédéterminé.

FINANCIAL DATA
MANAGEMENT SYSTEM

ISSUANCE
REQUEST

ISSUER-SIDE FINANCIAL
MANAGEMENT UNIT

SELLER-SIDE FINANCIAL
MANAGEMENT UNIT

CHECK
ISSUING
MEANS

FREEZING
MEANS

SELLER'S BANK
ACCOUNT

CUSTOMER'S
BANK ACCOUNT

MONEY
SENDING
MEANS

MONEY
RECEIVING
MEANS

CASHING
REQUEST

CASHING MEANS

CUSTOMER (BUYER) A

STORE (SELLER) B

DRAWER-SIDE ELECTRONIC
CHECK MANAGEMENT UNIT

DRAWEE-SIDE ELECTRONIC
CHECK MANAGEMENT UNIT

CASHING
COMMAND

ELECTRONIC
CHECK DATA
STORAGE MEANS

CASHING
REQUESTING
MEANS

DRAWING
COMMAND

ELECTRONIC CHECK
DRAWING MEANS

ELECTRONIC CHECK
ACCEPTING MEANS

REDRAWING
COMMAND

DRAWING PERMISSION
DETERMINATION MEANS

REDRAWING MEANS

TOTAL AMOUNT
MANAGEMENT MEANS

ELECTRONIC CHECK
MANAGEMENT UNIT

FIG. 1

**FIG. 2**

# FIG. 3

| Common Control Segment | | |
|---|---|---|
| Electronic Wallet Management Data Segment | Electronic Wallet ID (Issuance No.) | |
| | Date of Issue | Valid Period |
| | Issuer Name | Issuer Code |
| | User Authentication Data | Type of Electronic Wallet |
| | Date of Last Transaction | Last Transaction Log |
| User Management Data Segment | Private Data | |
| | User Authentication Data | |
| | Network Management Data | |
| Transaction Management Data Segment | Transaction Management Sub-segment | |
| | Authentication Center Data | |
| | Transaction Management Center Data | |
| | Financial Institution Data | |
| | Credit Company Data | |
| | House Card Company Data | |
| Money Management Data Segment | Money Control Sub-segment | |
| | Money Management Sub-segment | |
| Check/Bill Management Data Segment | Check/Bill Control Sub-segment | |
| | Owner's Check Management Sub-segment | |
| | Received Check Management Sub-segment | |

FIG. 4

| Check/Bill Control Sub-segment | Address and Item Management Section | Address of Common Data Section in Drawing Data | | Item Management Data for the Same | |
|---|---|---|---|---|---|
| | | Address of Usage Data Section in Drawing Data | | Item Management Data for the Same | |
| | | Address of Reception Data Section in Reception Management Data | | Item Management Data for the Same | |
| | | Address of Reuse Data Section in Reception Management Data | | Item Management Data for the Same | |
| | Password Management Section | Sub-Password | Password Usage Mode | Type of Digital Signature | |
| Owner's Check Management Sub-segment | Common Data Section | Name of Issuing Financial Institution | | Financial Account Management Address | |
| | | Date and Time of Issue | | Check Payment Ceiling | |
| | | Check Type | | Dividable Check Mode | |
| | | Amount of Own Mortgage (Freeze Data) | | Correspondent-Engaged Freeze Data | |
| | | Number of Checks Issued | | Check IDs (for Individual Checks) | |
| | | Valid Period of Checks | | Drawing Count Limit | |
| | | Number of Checks Used | | Provisional Settlement Check Data | |
| | Drawing Data Section | Check ID | Date and Time of Drawing | Amount | Drawee Data |
| | | Drawing Number | Beginning Date for Cashing | Period for Cashing | Purpose of Drawing |
| | | Provisional Settlement Type | Scheduled Final Payment Date | Date and Time of Final Payment | Date and Time of Product Delivery |
| | | ⋮ | | | |

## FIG. 5

EP 1 072 995 B1

| Received Check Management Sub-segment | Reception Data Section | Drawer Data | Country Name | | Country ID | | Currency Unit | | Check ID | |
|---|---|---|---|---|---|---|---|---|---|---|
| | | | Name of Issuing Financial Institution | | Code of Issuing Financial Institution | | Sales Office Name | | Sales Office Code | |
| | | | Date of Issue | Check Type | | Dividable Check Mode | Freeze Data | | Drawing Count Limit | |
| | | | Period for Cashing | Account Number | | Date and Time of Drawing | | | Drawing Number /Drawing Data | |
| | | | Beginning Date for Cashing | Amount of Drawing | | Drawer Authentication Data | | | Drawee Data | |
| | | Reception Data | Redrawing ID | Date and Time of Redrawing | | Amount of Redrawing | | | Redrawer Authentication Data | |
| | | | Drawing Count | Purpose of Redrawing | | Redrawing Number | | | Endorser Authentication Data | |
| | | | : | | | | : | | | |
| | Reuse Data Section | | Redrawn Check ID | Date and Time of Redrawing | | Amount of Redrawing | | | Redrawee Data | |
| | | | Redrawing Number | Purpose of Redrawing | | Drawing Count | | | Check Address in Reception Data Section | |
| | | | Provisional Payment Type | Date of Scheduled Final Payment | | Date and Time of Final Payment | | | Date and Time of Product Delivery | |
| | | | : | | | | : | | | |

**52 ISSUING BANK COMPUTER**

57 — CORRESPONDENT BANK COMPUTER

S4

S5 — EXECUTE WITHDRAWAL

S3

VALIDATE CHECK AND WITHDRAW FROM LOCAL DEPOSIT ACCOUNT

S13

S7

S6

58 — CREDIT COMPANY COMPUTER

S8 — EXECUTE PAYMENT

EXECUTE CHECK MANAGEMENT, MAKE TRANSFER, AND PREPARE BANK STATEMENT

S10

S9

55 INTER-BANK TRANSACTION SYSTEM

S14

56 SELLER-SIDE BANK COMPUTER

DEPOSIT MONEY TO SELLER'S ACCOUNT

S15

S16

S12

S2

S11

S1

53 — ELECTRONIC WALLET DEVICE

TERMINAL — 54

S17

**FIG. 6**

EP 1 072 995 B1

FIG. 7

57 — CORRESPONDENT BANK COMPUTER

S25 — EXECUTE PROVISIONAL WITHDRAWAL

S36 — EXECUTE WITHDRAWAL

S24 S26

52 ISSUING BANK COMPUTER

VALIDATE CHECK AND WITHDRAW FROM LOCAL DEPOSIT ACCOUNT

EXECUTE CHECK MANAGEMENT AND MAKE TRANSFER

EXECUTE FINAL WITHDRAWAL — S34

PREPARE BANK STATEMENT — S41

S35 S37

58 — CREDIT COMPANY COMPUTER

S28 — EXECUTE PROVISIONAL PAYMENT

S39 — EXECUTE PAYMENT

S27 S29

S38 S40

S23

S43

55 INTER-BANK TRANSACTION SYSTEM

S30

S44

56 SELLER-SIDE BANK COMPUTER

DEPOSIT MONEY TO SELLER'S ACCOUNT

S45

S46

(S331)

S33

(S421)

S42

S31

S22

S21

59 — ATM

ELECTRONIC WALLET DEVICE

TERMINAL — 54

(S20)

53

S32

EP 1 072 995 B1

FIG. 8

FIG. 9

START OF ELECTRONIC CHECK
ISSUANCE PROCESS USING ATM

CHOOSE "ISSUE CHECKBOOK"
COMMAND ON ATM MENU — S101

ALREADY HAS EWD? — S102
NO

YES — S103

INSERT EWD

ENTER AUTHENTICATION DATA — S104

ENTER PARAMETERS (NUMBER OF
CHECKS, CHECK PAYMENT CEILING,
DRAWING COUNT LIMIT,
PROVISIONAL PAYMENT DATA,
DIVISION DATA) — S105

SEND ISSUANCE REQUEST MESSAGE
TO ISSUING BANK COMPUTER — S106

RECEIVE RESPONSE — S107

S108
ANY ERROR? YES

NO — S112

DISPLAY ERROR
INFORMATION

S109
ALREADY HAS EWD? YES S114

NO

CLEAR MEMORY
DATA IN EWD

S113
ALREADY
HAS EWD? NO

S110 WRITE CHECK ISSUANCE
DATA INTO NEW EWD

WRITE
CHECK ISSUANCE
DATA INTO EWD — S115 YES

S111 ISSUE EWD

EJECT EWD — S116

END OF ELECTRONIC CHECK
ISSUANCE PROCESS USING ATM

FIG. 10

32

START OF ELECTRONIC CHECK
ISSUANCE PROCESS USING EWD

CHOOSE "ISSUE CHECKBOOK"
COMMAND ON EWD MENU — S121

ENTER AUTHENTICATION DATA — S122

ENTER PARAMETERS (NUMBER OF
CHECKS, CHECK PAYMENT CEILING,
DRAWING COUNT LIMIT,
PROVISIONAL PAYMENT DATA,
DIVISION DATA) — S123

SEND ISSUANCE REQUEST MESSAGE
TO ISSUING BANK COMPUTER — S124

RECEIVE RESPONSE — S125

S126 — ANY ERROR? — YES

S129

NO

S127 — CLEAR MEMORY DATA IN EWD

DISPLAY ERROR
INFORMATION

S128 — WRITE CHECK ISSUANCE
DATA INTO EWD

END OF ELECTRONIC CHECK
ISSUANCE PROCESS USING EWD

FIG. 11

33

START OF ELECTRONIC
CHECK ISSUING PROCESS

RECEIVE REQUEST MESSAGE FOR
ISSUANCE OF ELECTRONIC CHECK — S131

MAKE ACCESS TO USER ACCOUNT
DATABASE, BASED ON ACCOUNT
INFORMATION PROVIDED AS PART
OF USER AUTHENTICATION DATA — S132

S133 — CUSTOMER'S
ACCOUNT DATABASE
IS FOUND? — NO

YES

S134 — ENTERED
USER AUTHENTICATION DATA
= DATA FOUND IN
DATABASE? — NO

YES

S135 — CALCULATE HOW MUCH DEPOSIT SHOULD BE
FROZEN, ACCORDING TO CREDITWORTHINESS
RECORDED IN USER ACCOUNT DATABASE
AND CHECK PAYMENT CEILING ENTERED

S136 — DEPOSIT TO BE FROZEN $\leqq$
CURRENT ACCOUNT BALANCE — NO

YES

S138 — NEW BALANCE = CURRENT BALANCE
– DEPOSIT TO BE FROZEN

S139 — NEW TOTAL FROZEN AMOUNT =
CURRENT TOTAL FROZEN AMOUNT
+ DEPOSIT TO BE FROZEN

SEND ERROR
INFORMATION — S137

( a )          ( b )

FIG. 12

(a)

GENERATE DISCONTINUOUS CHECK
IDS ACCORDING TO THE NUMBER
OF NEW CHECKS BEING REQUESTED —S140

USE PROVISIONAL
SETTLEMENT? —S141
NO

YES

PRODUCE PROVISIONAL SETTLEMENT
DATA FOR PROVISIONAL PAYMENTS —S142

USE DIVIDED MODE? —S143
NO

YES

PRODUCE DIVISION DATA —S144

DETERMINE DRAWING COUNT LIMIT
AND VALID PERIOD, BASED ON
CREDITWORTHINESS, CEILING,
OR FROZEN AMOUNT OF DEPOSIT —S145

PRODUCE ISSUING FINANCIAL INSTITUTION
DATA AND AUTHENTICATION DATA —S146

CREATE CHECK MANAGEMENT DATABASE —S147

SEND CHECK ISSUANCE DATA —S148

(b)

END OF ELECTRONIC
CHECK ISSUING PROCESS

FIG. 13

START OF DRAWING
(PAYMENT) PROCESS

S151 — CHOOSE "DRAW CHECK"
COMMAND ON MENU SCREEN

S152 — USABLE CHECK? — NO

YES

S153 — WITHIN VALID PERIOD? — NO

YES

S154 — DISPLAY DATA ENTRY
SCREEN FOR DRAWING

S155 — ENTER USER AUTHENTICATION DATA

S156 — CORRECT USER
AUTHENTICATION
DATA? — NO

YES

S157 — ENTER AMOUNT OF MONEY
TO BE PAID BY CHECK

S158 — CHECK PAYMENT
CEILING – TOTAL AMOUNT
≧ SPECIFIED AMOUNT — NO

YES

DISPLAYS ERROR
INFORMATION — S159

c

d

FIG. 14

**FIG. 15**

START OF
REDRAWING PROCESS

S171 — CHOOSE "REDRAW CHECK"
COMMAND ON EWD MENU

S172 — CAN BE REDRAWN? — NO

YES

S173 — WITHIN VALID PERIOD? — NO

YES

S174 — DISPLAY DATA ENTRY
SCREEN FOR REDRAWING

S175 — ENTERS USER AUTHENTICATION DATA

S176 — CORRECT USER
AUTHENTICATION
DATA? — NO

YES

S177 — ENTER DRAWING DATA
AND AMOUNT TO BE PAID

S178 — AMOUNT
THAT CAN BE REDRAWN ≧
SPECIFIED AMOUNT? — NO

DISPLAYS ERROR
INFORMATION — S179

YES

e

f

FIG. 16

(e)

SEARCH ELECTRONIC CHECKS WITH SHORT REMAINING VALID PERIOD — S180

FACE VALUE > SPECIFIED AMOUNT? — S181

NO

PRODUCE ELECTRONIC CHECK TO BE REDRAWN, BASED ON FACE VALUE OF SELECTED CHECK — S182

GENERATE CHECK ID — S183

CLEAR FACE VALUE OF SELECTED CHECK — S184

SET "VOID" FLAG — S185

SPECIFIED AMOUNT (AMOUNT TO BE PAID) = SPECIFIED AMOUNT – FACE VALUE — S186

SPECIFIED AMOUNT=0? — S187

NO

YES

FACE VALUE = FACE VALUE – SPECIFIED AMOUNT — S188

PRODUCE ELECTRONIC CHECK TO BE REDRAWN, BASED ON SPECIFIED AMOUNT — S189

GENERATE DIVISION ID — S190

YES

PRODUCE REDRAWING HISTORY LOG — S191

EXECUTE ELECTRONIC CHECK PAYMENT (REDRAWING) — S192

SUCCESSFULLY RECEIVED? — S193

NO

CLEARS WORK AREA — S194

YES

UPDATE DATA IN ELECTRONIC WALLET DEVICE — S195

(f)

END OF REDRAWING PROCESS

FIG. 17

START OF ELECTRONIC
CHECK RECEPTION PROCESS

S201

RECEIVE MESSAGE

S202

ELECTRONIC CHECK? — NO

YES — S203

WITHIN VALID PERIOD? — NO

YES — S204

REMAINING VALID PERIOD =
EXPIRATION DATE - RECEPTION DATE

S205

REMAINING VALID PERIOD >
ACCEPTANCE REFUSAL PERIOD? — NO

YES — S206

SEND ACCEPTANCE
REFUSAL MESSAGE
TO DRAWER (PAYER)

h

S207

REMAINING VALID PERIOD >
EXPIRATION WARNING PERIOD? — YES

NO — S208

DISPLAY MESSAGE TO WARN THAT
ELECTRONIC CHECK IS EXPIRING SOON

SAVES CONTENT OF
RECEIVED ELECTRONIC CHECK — S209

g

FIG. 18

g

**S210**
USE PROVISIONAL PAYMENT? — YES

**S211**
ISSUING FINANCIAL INSTITUTION IS REACHABLE? — NO

NO

**S214**
NO — ISSUING FINANCIAL INSTITUTION IS REACHABLE?

YES (S211) → 

**S212**
SEND VALIDATION REQUEST AND FULL PAYMENT REQUEST

**S215**
SET REMINDER FLAG FOR VALIDATION REQUEST

YES (S214)

**S216**
SENDS A VALIDATION REQUEST MESSAGE

**S213**
SET REMINDER FLAGS FOR VALIDATION REQUEST AND FULL PAYMENT REQUEST

**S217**
RECEIVE RESPONSE MESSAGE

**S218**
SUCCESSFULLY VALIDATED? — NO

**S221**
SENDS ACCEPTANCE REFUSAL MESSAGE TO DRAWER

**S219** YES
SET FLAG IN ELECTRONIC CHECK TO INDICATE ITS VALIDITY

**S220**
TRANSMIT NORMAL RESPONSE MESSAGE TO INFORM DRAWER OF SUCCESSFUL ACCEPTANCE

h

END OF ELECTRONIC CHECK RECEPTION PROCESS

**FIG. 19**

FIG. 20

EP 1 072 995 B1

120  120b

120a | 100002 | 1-100000 | ¥100,000

121a  121  121b

| 100002 | 1-9000 | ¥9,000 |

123  123b

123a | 100002 | 9001-99000 | ¥90,000

122a | 100002 | 9001-100000 | ¥91,000 | 122b

122

124a | 100002 | 99001-100000 | ¥1,000 | 124b

124

**FIG. 21**

EP 1 072 995 B1

130

130a 130b
| 100003 | ¥100,000 |

131a 131 131b
| 100009 | 100003 | ¥9,000 |

132a 132 132b
| 100010 | 100003 | ¥91,000 |

133a 133 133b
| 100100 | 100010 | 100003 | ¥90,000 |

134a 134 134b
| 100200 | 100010 | 100003 | ¥1,000 |

FIG. 22

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7711723 A